(19) Europäisches Patentamt
European Patent Office
Office européen des brevets

(11) **EP 3 575 184 B1**

(12) **EUROPEAN PATENT SPECIFICATION**

(45) Date of publication and mention
of the grant of the patent:
**23.09.2020 Bulletin 2020/39**

(51) Int Cl.:
**B62D 5/04** *(2006.01)*    **B62D 6/00** *(2006.01)*

(21) Application number: **19177351.4**

(22) Date of filing: **29.05.2019**

(54) **STEERING CONTROL APPARATUS**

LENKSTEUERUNGSVORRICHTUNG

APPAREIL DE COMMANDE DE DIRECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2018 JP 2018103467**

(43) Date of publication of application:
**04.12.2019 Bulletin 2019/49**

(73) Proprietor: **JTEKT CORPORATION
Osaka 542-8502 (JP)**

(72) Inventors:
• **ANRAKU, Koji
Osaka-shi, Osaka 542-8502 (JP)**
• **NAMIKAWA, Isao
Osaka-shi, Osaka 542-8502 (JP)**
• **KAKIMOTO, Yusuke
Osaka-shi, Osaka 542-8502 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Straße 22
85354 Freising (DE)**

(56) References cited:
**EP-A1- 3 219 580**

## Description

BACKGROUND OF THE INVENTION

1. Field of the Invention

The present invention relates to a steering control apparatus.

2. Description of the Related Art

Hitherto, there is known a so-called steer-by-wire type steering system that achieves separation in power transmission between a steering wheel and steered wheels. This steering system includes a reaction motor and a steering operation motor. The reaction motor is a source of a steering reaction force to be applied to a steering shaft. The steering operation motor is a source of a steering operation force for turning the steered wheels. When a vehicle is traveling, a control apparatus of the steering system generates the steering reaction force through the reaction motor, and turns the steered wheels through the steering operation motor.

It is not likely that a road reaction force applied to the steered wheels is transmitted to the steering wheel because the steer-by-wire type steering system achieves the separation in the power transmission between the steering wheel and the steered wheels. Thus, it is difficult for the driver to grasp a road condition as the steering reaction force (tactile feedback) that may be felt by the hands through the steering wheel.

For example, a control apparatus described in Japanese Patent Application Publication No. 2017-165219 (JP 2017-165219 A), disclosing the features of the preamble of claim 1 and having family member EP 3219580 A1, calculates an ideal axial force and a road axial force. The ideal axial force is an ideal rack axial force that is based on a target steered angle. The road axial force is an estimated value of a rack axial force that is based on a current value of the steering operation motor. The control apparatus sums up the ideal axial force and the road axial force at predetermined allocation ratios, and controls the reaction motor by using a base reaction force that is based on the summed-up axial forces. The road axial force reflects the road condition (road information), and therefore the steering reaction force generated by the reaction motor also reflects the road condition. Thus, the driver can grasp the road condition as the steering reaction force.

The control apparatus calculates a limiting reaction force for imaginarily limiting an operation range of the steering wheel. The control apparatus selects a larger one of a target steering angle and the target steered angle. When the selected target steering angle or the selected target steered angle reaches a threshold, the control apparatus generates the limiting reaction force, and steeply increases the limiting reaction force. The threshold is set from the viewpoint of steeply increasing the steering reaction force both immediately before a rack shaft configured to turn the steered wheels reaches a limit position of its physically movable range and immediately before the steering wheel reaches a limit position of an operation range defined depending on a spiral cable.

The control apparatus calculates a final reaction force by summing up the base reaction force and the limiting reaction force, and controls the reaction motor by using the final reaction force. When the steering reaction force steeply increases after the target steering angle or the target steered angle reaches the threshold, it is difficult for the driver to operate the steering wheel in a direction in which the absolute value of the steering angle increases. This control can imaginarily create the operation range of the steering wheel and furthermore the movable range of the rack shaft.

The control apparatus of JP 2017-165219 A has the following concerns. That is, when the limiting reaction force is calculated, the control apparatus calculates the final reaction force to be used for controlling the reaction motor by adding the limiting reaction force to the base reaction force. Since the limiting reaction force is added to the base reaction force, an excessive steering reaction force may be applied to the driver. This phenomenon is likely to occur, for example, when the limiting reaction force is added in a state in which the allocation ratio of the road axial force to the base reaction force is larger, that is, in a state in which the road axial force is dominant as in a case where the vehicle turns with a large radius at a low speed.

SUMMARY OF THE INVENTION

It is one object of the present invention to provide a steering control apparatus in which a more appropriate steering reaction force can be applied to a driver.

One aspect of the present invention relates to a steering control apparatus configured to control a motor based on a command value calculated depending on a steering condition. The motor is configured to generate a driving force to be applied to a steering mechanism of a vehicle including a steering operation shaft configured to turn a steered wheel. The steering control apparatus includes a steering range axial force calculation circuit, a limiting axial force calculation circuit, and a selection circuit. The steering range axial force calculation circuit is configured to calculate a steering range axial force based on a condition amount of the vehicle. The steering range axial force is an axial force applied to the steering operation shaft when a steering wheel is operated within a defined operation range. The limiting axial force calculation circuit is configured to calculate a limiting axial force as an axial force of the steering operation shaft based on a condition amount of the vehicle in which the steering condition or a steered condition of the steered wheel is reflected, so as to imaginarily limit an operation of the steering wheel. The selection circuit is configured to select an axial force having a largest absolute value out of the steering range axial force and the limiting axial force as an axial force to be reflected in the command value.

According to this configuration, when the selection circuit selects, as the axial force to be reflected in the command value, the steering range axial force calculated based on the condition amount of the vehicle, the steering range axial force is reflected in the command value. Therefore, the motor generates a driving force that reflects the condition of the vehicle. Thus, the driver can acquire tactile feedback via the steering wheel in response to the condition of the vehicle. When the selection circuit selects, as the axial force to be reflected in the command value, the limiting axial force for imaginarily limiting the operation of the steering wheel, the limiting axial force is reflected in the command value. Therefore, the driver acquires a feeling of abutment as the steering reaction force. Thus, the driver's operation for the steering wheel can be limited imaginarily. An axial force having a largest absolute value out of the steering range axial force and the limiting axial force is selected as the axial force to be reflected in the command value. Therefore, it is possible to reduce the occurrence of a case where an excessive axial force is reflected in the command value unlike a case where both the steering range axial force and the limiting axial force are reflected in the command value. Thus, a more appropriate steering reaction force can be applied to the driver. Further, application of an excessive steering reaction force to the driver is suppressed. Thus, it is possible to reduce driver's discomfort due to the application of an excessive steering reaction force.

In the steering control apparatus of the aspect described above, the limiting axial force calculation circuit may include a range limiting axial force calculation circuit and an operation limiting axial force calculation circuit. The range limiting axial force calculation circuit is configured to calculate a range limiting axial force as the limiting axial force so as to limit the operation range of the steering wheel to an imaginary operation range. The operation limiting axial force calculation circuit is configured to calculate an operation limiting axial force as the limiting axial force so as to imaginarily limit the operation of the steering wheel in a situation in which a steering operation for the steered wheel is limited.

According to this configuration, when the selection circuit selects, as the axial force to be reflected in the command value, the range limiting axial force for limiting the operation range of the steering wheel to the imaginary operation range, the range limiting axial force is reflected in the command value. Therefore, the driver acquires a feeling of abutment as the steering reaction force. Through the tactile feedback acquired via the steering wheel, the driver can recognize that the steering wheel reaches a limit position of the imaginary operation range. When the selection circuit selects, as the axial force to be reflected in the command value, the operation limiting axial force for imaginarily limiting the operation of the steering wheel in the situation in which the steering operation for the steered wheel is limited, the operation limiting axial force is reflected in the command value. Therefore, the driver acquires a feeling of abutment as the steering reaction force. Through the tactile feedback acquired via the steering wheel, the driver can recognize the situation in which the steering operation for the steered wheel is limited. An axial force having the largest absolute value among the steering range axial force, the range limiting axial force serving as the limiting axial force, and the operation limiting axial force serving as the limiting axial force is selected as the axial force to be reflected in the command value. Therefore, it is possible to reduce the occurrence of the case where an excessive axial force is reflected in the command value. Thus, the application of an excessive steering reaction force to the driver is suppressed.

In the steering control apparatus of the aspect described above, the operation limiting axial force calculation circuit may include a first limiting axial force calculation circuit. The first limiting axial force calculation circuit is configured to calculate a first limiting axial force as the limiting axial force so as to imaginarily limit the operation of the steering wheel in a situation in which the steered wheel abuts against an obstacle.

According to this configuration, when the selection circuit selects, as the axial force to be reflected in the command value, the first limiting axial force for imaginarily limiting the operation of the steering wheel in the situation in which the steered wheel abuts against an obstacle, the first limiting axial force is reflected in the command value. Therefore, the driver acquires a feeling of abutment as the steering reaction force. Through the tactile feedback acquired via the steering wheel, the driver can recognize the situation in which the steered wheel abuts against an obstacle. An axial force having the largest absolute value among the steering range axial force, the range limiting axial force, and the first limiting axial force serving as the operation limiting axial force is selected as the axial force to be reflected in the command value. Therefore, it is possible to reduce the occurrence of the case where an excessive axial force is reflected in the command value. Thus, the application of an excessive steering reaction force to the driver is suppressed.

In the steering control apparatus of the aspect described above, on a premise that the steering mechanism has a structure that achieves separation in power transmission between the steering wheel and the steered wheel or a structure that allows connection and disconnection of the power transmission between the steering wheel and the steered wheel, and that the steering mechanism is provided with a reaction motor serving as the motor and configured to generate, as the driving force, a steering reaction force that is a force to be applied in a direction opposite to an operation direction of the steering wheel, and a steering operation motor serving as the motor and configured to apply, to the steering operation shaft, a steering operation force that is a force for turning the steered wheel, the operation limiting axial force calculation circuit may include a second limiting axial force calculation circuit. The second limiting axial force calculation circuit is configured to calculate a second limiting axial force as the limiting axial force so as to imaginarily limit the operation of the steering wheel in a situation in which a torque of the steering operation motor is limited in comparison with an original torque.

According to this configuration, when the selection circuit selects, as the axial force to be reflected in the command value, the second limiting axial force for imaginarily limiting the operation of the steering wheel in the situation in which the torque of the motor is limited, the second limiting axial force is reflected in the command value. Therefore, the driver acquires a feeling of abutment as the steering reaction force. Through the tactile feedback acquired via the steering wheel, the driver can recognize the situation in which the torque of the motor is limited. An axial force having the largest absolute value among the steering range axial force, the range limiting axial force, and the second limiting axial force serving as the operation limiting axial force is selected as the axial force to be reflected in the command value. Therefore, it is possible to reduce the occurrence of the case where an excessive axial force is reflected in the command value. Thus, the application of an excessive steering reaction force to the driver is suppressed.

In a case of employing a configuration including both the first limiting axial force calculation circuit and the second limiting axial force calculation circuit as the operation limiting axial force calculation circuit, the selection circuit selects, as the axial force to be reflected in the command value, an axial force having the largest absolute value among the steering range axial force, the range limiting axial force, the first limiting axial force serving as the operation limiting axial force, and the second limiting axial force serving as the operation limiting axial force. Therefore, it is possible to reduce the occurrence of the case where an excessive axial force is reflected in the command value.

In the steering control apparatus of the aspect described above, the steering range axial force calculation circuit may include an estimated axial force calculation circuit configured to calculate the axial force of the steering operation shaft as an estimated axial force based on a condition amount that reflects a road condition or vehicle behavior.

According to this configuration, the estimated axial force reflects the road condition or the vehicle behavior. Therefore, it is likely that an estimated axial force having a larger value is calculated depending on the road condition or the vehicle behavior. Thus, it is likely that an excessive axial force is reflected in the command value when the steering control apparatus employs a configuration in which both the estimated axial force (steering range axial force) and the limiting axial force are reflected in the command value. According to the configuration described above, an axial force having a largest absolute value out of the estimated axial force (steering range axial force) and the limiting axial force is selected as the axial force to be reflected in the command value. Therefore, it is possible to reduce the occurrence of the case where an excessive axial force is reflected in the command value unlike the case where both the estimated axial force (steering range axial force) and the limiting axial force are reflected in the command value.

The steering control apparatus of the aspect described above may further include an ideal axial force calculation circuit and an allocation calculation circuit. The ideal axial force calculation circuit is configured to calculate an ideal axial force based on a target rotation angle of a rotating body configured to rotate in association with the steering operation for the steered wheel. The target rotation angle is calculated depending on the steering condition. The allocation calculation circuit is configured to calculate a mixed axial force as a final steering range axial force by summing up a value obtained by multiplying the estimated axial force by an allocation ratio and a value obtained by multiplying the ideal axial force by an allocation ratio. The allocation ratios are set individually depending on the condition amount that reflects the vehicle behavior or the road condition or depending on the steering condition.

According to this configuration, the ideal axial force calculated based on the target rotation angle and the estimated axial force calculated based on the condition amount that reflects the vehicle behavior or the like are summed up at the allocation ratios set depending on the condition amount that reflects the vehicle behavior or the like, thereby obtaining an axial force that reflects the vehicle behavior or the like more finely.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a configuration diagram of a steer-by-wire type steering system on which a steering control apparatus according to a first embodiment is mounted;
FIG. 2 is a control block diagram of a control apparatus according to the first embodiment;
FIG. 3 is a control block diagram of a target steering angle calculation circuit according to the first embodiment;
FIG. 4 is a control block diagram of a vehicle model according to the first embodiment;
FIG. 5 is a graph illustrating a map that defines a relationship between a target pinion angle and an ideal axial force according to the first embodiment;
FIG. 6 is a graph illustrating a map that defines a relationship between an imaginary rack end angle (target steering angle or target pinion angle) and an imaginary rack end axial force according to the first embodiment;

FIG. 7 is a graph illustrating a relationship between the target steering angle and a final axial force according to the first embodiment;

FIG. 8 is a control block diagram of a vehicle model of a steering control apparatus according to a second embodiment;

FIG. 9 is a control block diagram of a first limiting axial force calculation circuit according to the second embodiment; and

FIG. 10 is a control block diagram of a second limiting axial force calculation circuit according to the second embodiment.

## DETAILED DESCRIPTION OF EMBODIMENTS

Description is given below of a steering control apparatus according to a first embodiment of the present invention, which is applied to a steer-by-wire type steering system.

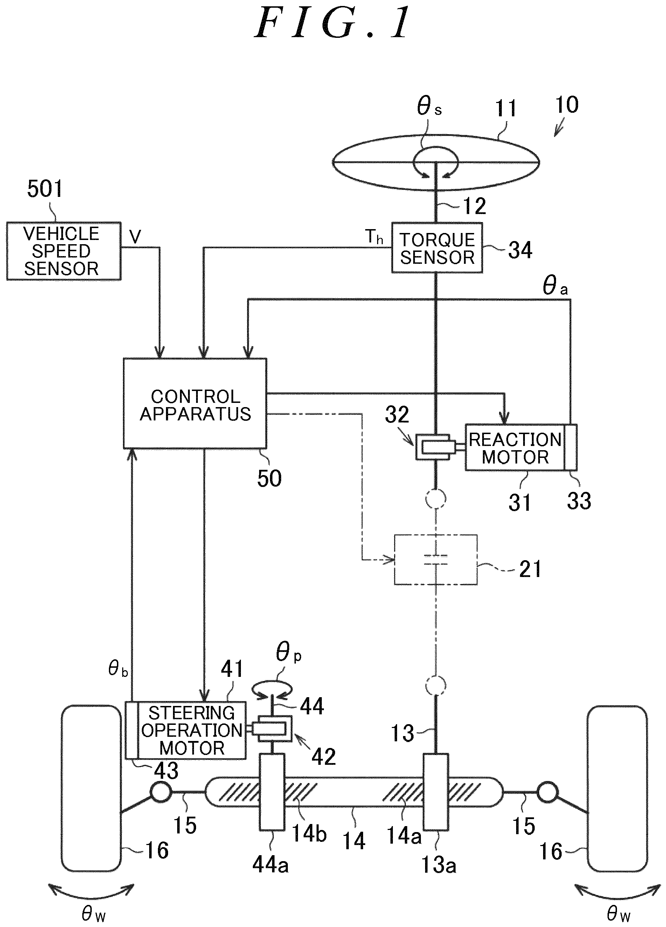

As illustrated in FIG. 1, a steering system 10 for a vehicle includes a steering shaft 12 coupled to a steering wheel 11. The steering system 10 further includes a steering operation shaft 14 extending along a vehicle width direction (lateral direction in FIG. 1). Right and left steered wheels 16 and 16 are coupled to both ends of the steering operation shaft 14 via tie rods 15 and 15, respectively. The steering operation shaft 14 performs linear motion to change a steered angle $\theta_w$ of each of the steered wheels 16 and 16. The steering shaft 12 and the steering operation shaft 14 constitute a steering mechanism.

<Structure for Generating Steering Reaction Force: Reaction Unit>

The steering system 10 includes a reaction motor 31, a speed reducing mechanism 32, a rotation angle sensor 33, and a torque sensor 34 as a structure for generating a steering reaction force. The steering reaction force is a force (torque) to be applied in a direction opposite to a direction of a driver's operation for the steering wheel 11. By applying the steering reaction force to the steering wheel 11, the driver can acquire appropriate tactile feedback.

The reaction motor 31 is a source of the steering reaction force. For example, a three-phase (U, V, W) brushless motor is employed as the reaction motor 31. The reaction motor 31 (to be exact, its rotation shaft) is coupled to the steering shaft 12 via the speed reducing mechanism 32. A torque of the reaction motor 31 is applied to the steering shaft 12 as the steering reaction force.

The rotation angle sensor 33 is provided on the reaction motor 31. The rotation angle sensor 33 detects a rotation angle $\theta_a$ of the reaction motor 31. The rotation angle $\theta_a$ of the reaction motor 31 is used for calculating a steering angle $\theta_s$. The reaction motor 31 and the steering shaft 12 operate in association with each other via the speed reducing mechanism 32. Therefore, the rotation angle $\theta_a$ of the reaction motor 31 is correlated to the steering angle $\theta_s$ that is a rotation angle of the steering shaft 12 and furthermore a rotation angle of the steering wheel 11.

Thus, the steering angle $\theta_s$ can be determined based on the rotation angle $\theta_a$ of the reaction motor 31.

The torque sensor 34 detects a steering torque $T_h$ applied to the steering shaft 12 through a rotational operation for the steering wheel 11. The torque sensor 34 is provided at a part of the steering shaft 12 that is located on the steering wheel 11 side with respect to the speed reducing mechanism 32.

<Structure for Generating Steering Operation Force: Steering Operation Unit>

The steering system 10 includes a steering operation motor 41, a speed reducing mechanism 42, and a rotation angle sensor 43 as a structure for generating a steering operation force that is power for turning the steered wheels 16 and 16.

The steering operation motor 41 is a source of the steering operation force. For example, a three-phase brushless motor is employed as the steering operation motor 41. The steering operation motor 41 (to be exact, its rotation shaft) is coupled to a pinion shaft 44 via the speed reducing mechanism 42. Pinion teeth 44a of the pinion shaft 44 mesh with rack teeth 14b of the steering operation shaft 14. A torque of the steering operation motor 41 is applied to the steering operation shaft 14 via the pinion shaft 44 as the steering operation force. In response to rotation of the steering operation motor 41, the steering operation shaft 14 moves along the vehicle width direction (lateral direction in FIG. 1).

The rotation angle sensor 43 is provided on the steering operation motor 41. The rotation angle sensor 43 detects a rotation angle $\theta_b$ of the steering operation motor 41. The steering system 10 includes a pinion shaft 13. The pinion shaft 13 is provided so as to intersect the steering operation shaft 14. Pinion teeth 13a of the pinion shaft 13 mesh with rack teeth 14a of the steering operation shaft 14. The pinion shaft 13 is provided in order to support the steering operation shaft 14 inside a housing (not illustrated) in cooperation with the pinion shaft 44. That is, a support mechanism (not illustrated) provided in the steering system 10 supports the steering operation shaft 14 so as to be movable along its axial direction, and presses the steering operation shaft 14 toward the pinion shafts 13 and 44. Thus, the steering operation shaft 14 is supported inside the housing. Another support mechanism that supports the steering operation shaft 14 inside the housing without using the pinion shaft 13 may be provided instead.

The steering system 10 includes a control apparatus 50. The control apparatus 50 controls the reaction motor 31 and the steering operation motor 41 based on detection results from various sensors. As the sensors, a vehicle speed sensor 501 is provided in addition to the rotation angle sensor 33, the torque sensor 34, and the rotation angle sensor 43 described above. The vehicle speed sensor 501 is provided on the vehicle to detect a vehicle speed V that is a traveling speed of the vehicle

The control apparatus 50 executes reaction control for generating a steering reaction force based on the steering torque $T_h$ through drive control for the reaction motor 31. The control apparatus 50 calculates a target steering reaction force based on the steering torque $T_h$ and the vehicle speed V, and calculates a target steering angle of the steering wheel 11 based on the calculated target steering reaction force, the steering torque $T_h$, and the vehicle speed V. The control apparatus 50 calculates a steering angle correction amount through feedback control of the steering angle $\theta_s$, which is executed so that the actual steering angle $\theta_s$ follows the target steering angle, and calculates a steering reaction force command value by adding the calculated steering angle correction amount to the target steering reaction force. The control apparatus 50 supplies, to the reaction motor 31, a current necessary to generate a steering reaction force based on the steering reaction force command value.

The control apparatus 50 executes steering operation control for turning the steered wheels 16 and 16 depending on a steering condition through drive control for the steering operation motor 41. The control apparatus 50 calculates a pinion angle $\theta_p$ that is an actual rotation angle of the pinion shaft 44 based on the rotation angle $\theta_b$ of the steering operation motor 41 that is detected through the rotation angle sensor 43. The pinion angle $\theta_p$ is a value that reflects the steered angle $\theta_w$ of each of the steered wheels 16 and 16. The control apparatus 50 calculates a target pinion angle by using the target steering angle described above. Then, the control apparatus 50 determines a deviation between the target pinion angle and the actual pinion angle $\theta_p$, and controls power supply to the steering operation motor 41 so as to eliminate the deviation.

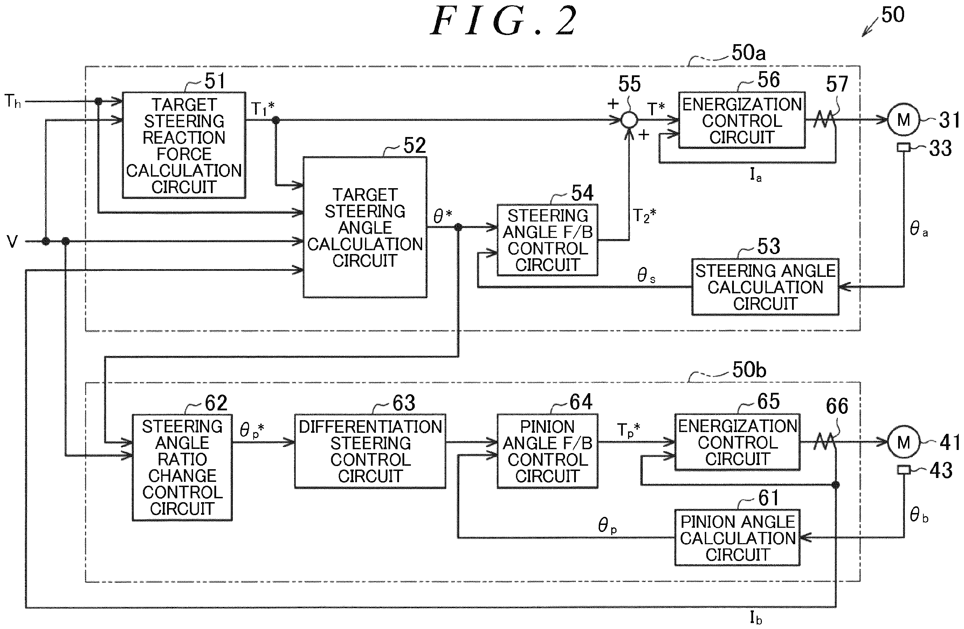

Next, a detailed configuration of the control apparatus 50 is described. As illustrated in FIG. 2, the control apparatus 50 includes a reaction control circuit 50a configured to execute the reaction control, and a steering operation control circuit 50b configured to execute the steering operation control.

<Reaction Control Circuit>

The reaction control circuit 50a includes a target steering reaction force calculation circuit 51, a target steering angle calculation circuit 52, a steering angle calculation circuit 53, a steering angle feedback control circuit 54, an adder 55, and an energization control circuit 56.

The target steering reaction force calculation circuit 51 calculates a target steering reaction force $T_1^*$ based on the steering torque $T_h$ and the vehicle speed V. The target steering reaction force calculation circuit 51 calculates a target steering reaction force $T_1^*$ having a larger value (absolute value) as the absolute value of the steering torque $T_h$ increases and as the vehicle speed V decreases.

The target steering angle calculation circuit 52 calculates a target steering angle $\theta^*$ of the steering wheel 11 by using the target steering reaction force $T_1^*$, the steering torque $T_h$, and the vehicle speed V. The target steering angle calculation circuit 52 has an ideal model that defines an ideal steering angle based on an input torque, which is the total sum of the target steering reaction force $T_1^*$ and the steering torque $T_h$. The ideal model is obtained by modeling a steering angle corresponding to an ideal steered angle based on the input torque through an experiment or the like in advance on the premise of a steering system in which the steering wheel 11 and the steered wheels 16 and 16 are mechanically coupled together. The target steering angle calculation circuit 52 determines the input torque by adding the target steering reaction force $T_1^*$ and the steering torque $T_h$ together, and calculates the target steering angle $\theta^*$ from the input torque based on the ideal model.

The steering angle calculation circuit 53 calculates the actual steering angle $\theta_s$ of the steering wheel 11 based on the rotation angle $\theta_a$ of the reaction motor 31 that is detected through the rotation angle sensor 33. The steering angle feedback control circuit 54 calculates a steering angle correction amount $T_2^*$ through feedback control of the steering angle $\theta_s$ so that the actual steering angle $\theta_s$ follows the target steering angle $\theta^*$. The adder 55 calculates a steering reaction force command value $T^*$ by adding the steering angle correction amount $T_2^*$ to the target steering reaction force $T_1^*$.

The energization control circuit 56 supplies electric power to the reaction motor 31 based on the steering reaction force command value $T^*$. Specifically, the energization control circuit 56 calculates a current command value for the reaction motor 31 based on the steering reaction force command value $T^*$. The energization control circuit 56 detects an actual current value $I_a$ generated in a power supply path to the reaction motor 31 through a current sensor 57 provided in the power supply path. The current value $I_a$ is a value of an actual current supplied to the reaction motor 31. Then, the energization control circuit 56 determines a deviation between the current command value and the actual current value $I_a$, and controls power supply to the reaction motor 31 so as to eliminate the deviation (feedback control of the current value $I_a$). Thus, the reaction motor 31 generates a torque based on the steering reaction force command value $T^*$. The driver can acquire appropriate tactile feedback in response to a road reaction force.

<Steering Operation Control Circuit>

As illustrated in FIG. 2, the steering operation control circuit 50b includes a pinion angle calculation circuit 61, a steering angle ratio change control circuit 62, a differentiation steering control circuit 63, a pinion angle feedback control circuit 64, and an energization control circuit 65.

The pinion angle calculation circuit 61 calculates the pinion angle $\theta_p$ that is an actual rotation angle of the pinion shaft 44 based on the rotation angle $\theta_b$ of the steering operation motor 41 that is detected through the rotation angle sensor 43. As described above, the steering operation motor 41 and the pinion shaft 44 operate in association with each other via the speed reducing mechanism 42. Therefore, there is a correlation between the rotation angle $\theta_b$ of the steering operation motor 41 and the pinion angle $\theta_p$. By using the correlation, the pinion angle $\theta_p$ can be determined from the rotation angle $\theta_b$ of the steering operation motor 41. As described above, the pinion shaft 44 meshes with the steering operation shaft 14. Therefore, there is also a correlation between the pinion angle $\theta_p$ and the movement amount of the steering operation shaft 14. That is, the pinion angle $\theta_p$ is a value that reflects the steered angle $\theta_w$ of each of the steered wheels 16 and 16.

The steering angle ratio change control circuit 62 sets a steering angle ratio, which is the ratio of the steered angle $\theta_w$ to the steering angle $\theta_s$, based on a traveling condition of the vehicle (for example, the vehicle speed V), and calculates a target pinion angle based on the set steering angle ratio. The steering angle ratio change control circuit 62 calculates a target pinion angle $\theta_p^*$ so that the steered angle $\theta_w$ increases relative to the steering angle $\theta_s$ as the vehicle speed V decreases or that the steered angle $\theta_w$ decreases relative to the steering angle $\theta_s$ as the vehicle speed V increases. In order to achieve the steering angle ratio to be set based on the traveling condition of the vehicle, the steering angle ratio change control circuit 62 calculates a correction angle for the target steering angle $\theta^*$, and adds the calculated correction angle to the target steering angle $\theta^*$, thereby calculating the target pinion angle $\theta_p^*$ based on the steering angle ratio.

The differentiation steering control circuit 63 calculates a change speed of the target pinion angle $\theta_p^*$ (steered speed) by differentiating the target pinion angle $\theta_p^*$. The differentiation steering control circuit 63 calculates a correction angle for the target pinion angle $\theta_p^*$ by multiplying the change speed of the target pinion angle $\theta_p^*$ by a gain. The differentiation steering control circuit 63 calculates a final target pinion angle $\theta_p^*$ by adding the correction angle to the target pinion angle $\theta_p^*$. A delay in the steering operation is adjusted by advancing the phase of the target pinion angle $\theta_p^*$ calculated by the steering angle ratio change control circuit 62. That is, a steering operation response is secured based on the steered speed.

The pinion angle feedback control circuit 64 calculates a pinion angle command value $T_p^*$ through feedback control (proportional-integral-derivative (PID) control) of the pinion angle $\theta_p$ so that the actual pinion angle $\theta_p$ follows the final target pinion angle $\theta_p^*$ calculated by the differentiation steering control circuit 63.

The energization control circuit 65 supplies electric power to the steering operation motor 41 based on the pinion angle command value $T_p^*$. Specifically, the energization control circuit 65 calculates a current command value for the steering operation motor 41 based on the pinion angle command value $T_p^*$. The energization control circuit 65 detects an actual current value $I_b$ generated in a power supply path to the steering operation motor 41 through a current sensor 66 provided in the power supply path. The current value $I_b$ is a value of an actual current supplied to the steering operation motor 41. Then, the energization control circuit 65 determines a deviation between the current command value and the actual current value $I_b$, and controls power supply to the steering operation motor 41 so as to eliminate the deviation (feedback control of the current value Ib). Thus, the steering operation motor 41 rotates by an angle that is based on the pinion angle command value $T_p^*$.

<Target Steering Angle Calculation Circuit>

Next, the target steering angle calculation circuit 52 is described in detail. As described above, the target steering angle calculation circuit 52 calculates the target steering angle $\theta^*$ based on the ideal model from the input torque, which is the total sum of the target steering reaction force $T_1^*$ and the steering torque $T_h$. The ideal model is a model using the fact that an input torque $T_{in}^*$ that is a torque applied to the steering shaft 12 is represented by Expression (1).

$$T_{in}^* = J\theta^{*''} + C\theta^{*'} + K\theta^* \qquad (1)$$

In Expression (1), "J" represents a moment of inertia of each of the steering wheel 11 and the steering shaft 12, "C" represents a coefficient of viscosity (coefficient of friction) corresponding to, for example, friction of the steering operation shaft 14 against the housing, and "K" represents a spring modulus assuming the steering wheel 11 and the steering shaft 12 as springs.

As understood from Expression (1), the input torque $T_{in}^*$ is obtained by adding together a value obtained by multiplying a second-order time derivative $\theta^{*''}$ of the target steering angle $\theta^*$ by the moment of inertia J, a value obtained by multiplying a first-order time derivative $\theta^{*'}$ of the target steering angle $\theta^*$ by the coefficient of viscosity C, and a value obtained by multiplying the target steering angle $\theta^*$ by the spring modulus K. The target steering angle calculation circuit 52 calculates the target steering angle $\theta^*$ in accordance with the ideal model based on Expression (1).

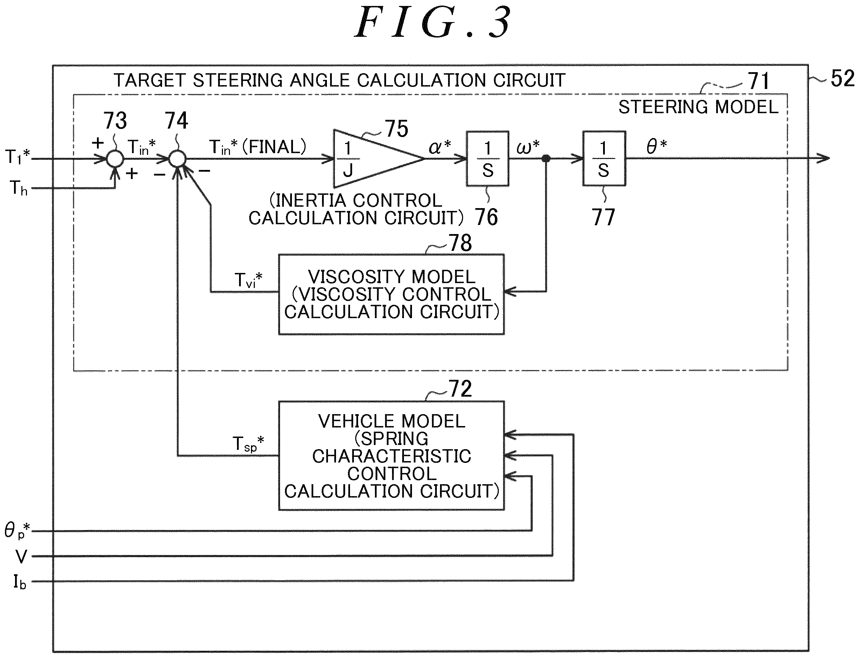

As illustrated in FIG. 3, the ideal model that is based on Expression (1) is divided into a steering model 71 and a vehicle model 72. The steering model 71 is tuned based on characteristics of the components of the steering system 10, such as the steering shaft 12 and the reaction motor 31. The steering model 71 includes an adder 73, a subtractor 74, an inertia model 75, a first integrator 76, a second integrator 77, and a viscosity model 78.

The adder 73 calculates the input torque $T_{in}^*$ by adding the target steering reaction force $T_1^*$ and the steering torque $T_h$ together. The subtractor 74 calculates a final input torque $T_{in}^*$ by subtracting a viscosity component $T_{vi}^*$ and a spring component $T_{sp}^*$ described later from the input torque $T_{in}^*$ calculated by the adder 73.

The inertia model 75 functions as an inertia control calculation circuit corresponding to the inertia term of Expression (1). The inertia model 75 calculates a steering angle acceleration $\alpha^*$ by multiplying together the final input torque $T_{in}^*$ calculated by the subtractor 74 and the inverse of the moment of inertia J.

The first integrator 76 calculates a steering angle velocity $\omega^*$ by integrating the steering angle acceleration $\alpha^*$ calculated by the inertia model 75. The second integrator 77 calculates the target steering angle $\theta^*$ by integrating the steering angle velocity $\omega^*$ calculated by the first integrator 76. The target steering angle $\theta^*$ is an ideal rotation angle of the steering wheel 11 (steering shaft 12) that is based on the steering model 71.

The viscosity model 78 functions as a viscosity control calculation circuit corresponding to the viscosity term of Expression (1). The viscosity model 78 calculates the viscosity component $T_{vi}^*$ of the input torque $T_{in}^*$ by multiplying together the steering angle velocity $\omega^*$ calculated by the first integrator 76 and the coefficient of viscosity C.

The vehicle model 72 is tuned based on characteristics of the vehicle on which the steering system 10 is mounted. A vehicle-side characteristic that influences the steering characteristic is determined based on, for example, specifications of a suspension and wheel alignment and a grip force (friction force) of each of the steered wheels 16 and 16. The vehicle model 72 functions as a spring characteristic control calculation circuit corresponding to the spring term of Expression (1). The vehicle model 72 calculates the spring component $T_{sp}^*$ (torque) of the input torque $T_{in}^*$ by multiplying together the target steering angle $\theta^*$ calculated by the second integrator 77 and the spring modulus K.

According to the target steering angle calculation circuit 52 having the configuration described above, the relationship between the input torque $T_{in}^*$ and the target steering angle $\theta^*$ can be tuned directly and furthermore a desired steering characteristic can be achieved by adjusting the moment of inertia J and the coefficient of viscosity C of the steering model 71 and the spring modulus K of the vehicle model 72.

The target pinion angle $\theta_p^*$ is calculated by using the target steering angle $\theta^*$ calculated from the input torque $T_{in}^*$ based on the steering model 71 and the vehicle model 72. Then, feedback control is performed so that the actual pinion angle $\theta_p$ equals the target pinion angle $\theta_p^*$. As described above, there is a correlation between the pinion angle $\theta_p$ and the steered angle $\theta_w$ of each of the steered wheels 16 and 16. Therefore, the turning operation of each of the steered wheels 16 and 16 that is based on the input torque $T_{in}^*$ is also determined by the steering model 71 and the vehicle model 72. That is, the steering feel of the vehicle is determined by the steering model 71 and the vehicle model 72. Thus, a desired steering feel can be achieved by adjusting the steering model 71 and the vehicle model 72.

In the control apparatus 50 having the configuration described above, the steering reaction force (tactile feedback to be acquired through a steering operation) is only based on the target steering angle $\theta^*$. That is, the steering reaction force does not change in response to vehicle behavior or a road condition (for example, the possibility of a slip that may occur on a road). Therefore, it is difficult for the driver to grasp the vehicle behavior or the road condition through the steering reaction force. In this embodiment, the vehicle model 72 has the following configuration from the viewpoint of addressing such concerns.

<Vehicle Model>

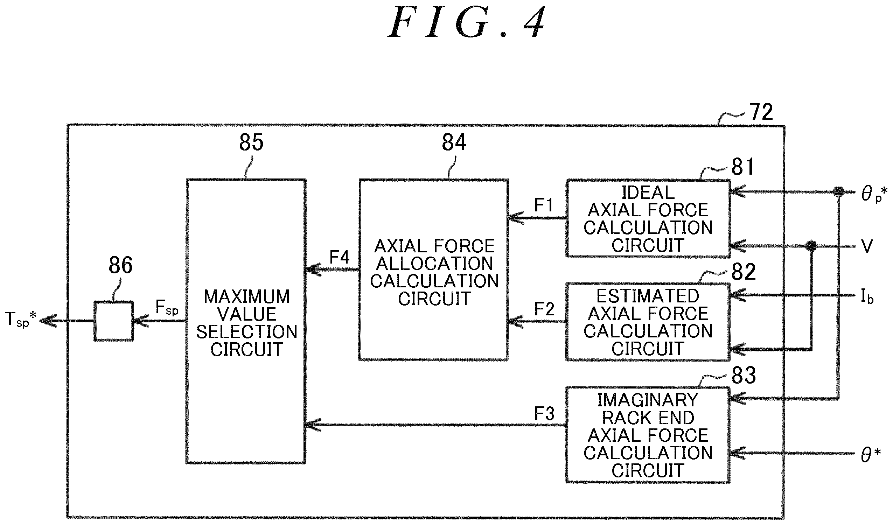

As illustrated in FIG. 4, the vehicle model 72 includes an ideal axial force calculation circuit 81, an estimated axial force calculation circuit 82, an imaginary rack end axial force calculation circuit 83, an axial force allocation calculation circuit 84, a maximum value selection circuit 85, and a conversion circuit 86.

The ideal axial force calculation circuit 81 calculates, based on the target pinion angle $\theta_p^*$, an ideal axial force F1 that is an ideal value of an axial force to be applied to the steering operation shaft 14 through the steered wheels 16 and 16. The ideal axial force calculation circuit 81 calculates the ideal axial force F1 by using an ideal axial force map stored in a storage apparatus of the control apparatus 50.

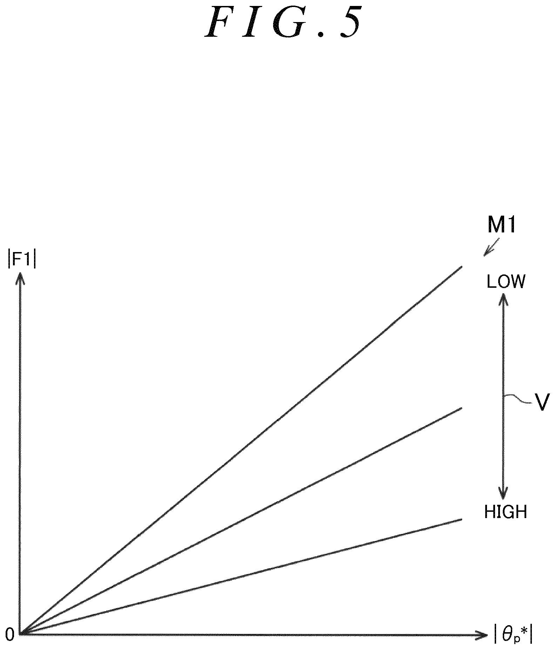

As illustrated in a graph of FIG. 5, an ideal axial force map M1 is a map having a horizontal axis representing the target pinion angle $\theta_p^*$ and a vertical axis representing the ideal axial force F1. The ideal axial force map M1 defines a relationship between the target pinion angle $\theta_p^*$ and the ideal axial force F1 depending on the vehicle speed V. The ideal axial force map M1 has the following characteristics. That is, the ideal axial force F1 is set to have a larger absolute value as the absolute value of the target pinion angle $\theta_p^*$ increases and as the vehicle speed V decreases. The absolute value of the ideal axial force F1 linearly increases relative to the increase in the absolute value of the target pinion angle $\theta_p^*$. The ideal axial force F1 is set to have the same sign (positive or negative) as the sign of the target pinion angle $\theta_p{}^*$.

As illustrated in FIG. 4, the estimated axial force calculation circuit 82 calculates an estimated axial force F2 (road reaction force) applied to the steering operation shaft 14 based on the current value $I_b$ of the steering operation motor 41. The current value $I_b$ of the steering operation motor 41 changes in response to the occurrence of a difference between the target pinion angle $\theta_p{}^*$ and the actual pinion angle $\theta_p$ due to a situation in which a disturbance caused by a road condition (road frictional resistance) affects the steered wheels 16. That is, the current value $I_b$ of the steering operation motor 41 reflects an actual road reaction force applied to the steered wheels 16 and 16. Therefore, an axial force that reflects an influence of the road condition can be calculated based on the current value $I_b$ of the steering operation motor 41. The estimated axial force F2 is determined by multiplying the current value $I_b$ of the steering operation motor 41 by a gain that is a coefficient based on the vehicle speed V.

The imaginary rack end axial force calculation circuit 83 calculates an imaginary rack end axial force F3 for imaginarily limiting an operation range of the steering wheel 11. The imaginary rack end axial force F3 is calculated from the viewpoint of steeply increasing a torque to be generated by the reaction motor 31 in a direction opposite to a steering direction (steering reaction torque) when the operation position of the steering wheel 11 is close to a limit position of its operation range and when the steering operation shaft 14 is close to a limit position of its physically movable range.

The limit position of the operation range of the steering wheel 11 is determined based on, for example, the length of a spiral cable provided on the steering wheel 11. The limit position of the physical operation range of the steering operation shaft 14 is a position where the movement range of the steering operation shaft 14 is physically limited due to the occurrence of so-called "end abutment", in which the end of the steering operation shaft 14 (rack end) abuts against the housing (not illustrated).

The imaginary rack end axial force calculation circuit 83 acquires the target steering angle $\theta^*$ and the target pinion angle $\theta_p{}^*$ calculated by the steering angle ratio change control circuit 62 (see FIG. 2). The imaginary rack end axial force calculation circuit 83 compares the target steering angle $\theta^*$ with the target pinion angle $\theta_p{}^*$, and uses the target steering angle $\theta^*$ or the target pinion angle $\theta_p{}^*$ having a larger absolute value as an imaginary rack end angle for the calculation of the imaginary rack end axial force F3. The imaginary rack end axial force calculation circuit 83 calculates the imaginary rack end axial force F3 by using an imaginary rack end map stored in the storage apparatus of the control apparatus 50.

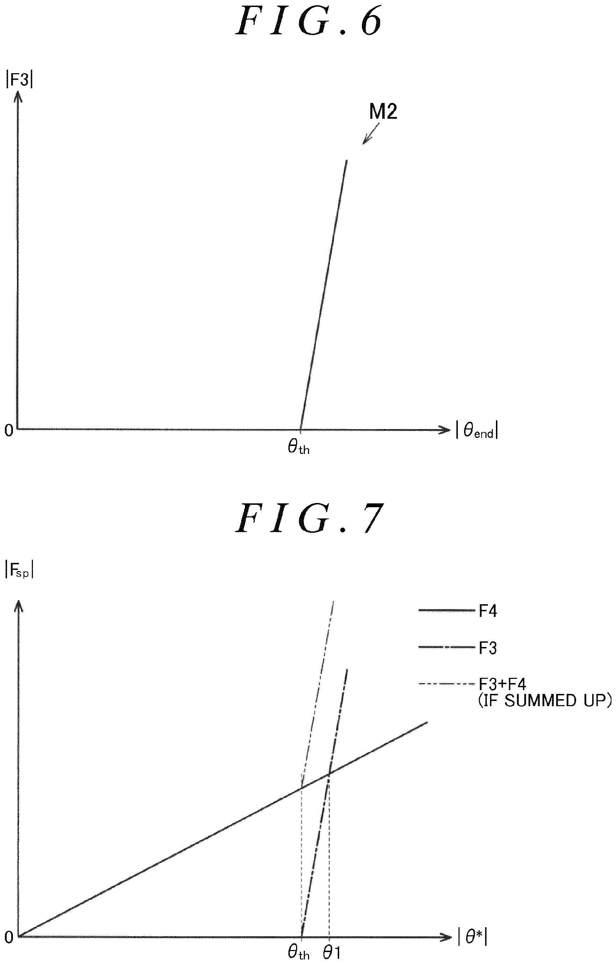

As illustrated in a graph of FIG. 6, an imaginary rack end map M2 is a map having a horizontal axis representing an imaginary rack end angle $\theta_{end}$ and a vertical axis representing the imaginary rack end axial force F3. The imaginary rack end map M2 defines a relationship between the imaginary rack end angle $\theta_{end}$ and the imaginary rack end axial force F3. The imaginary rack end map M2 has the following characteristics. That is, until the absolute value of the imaginary rack end angle $\theta_{end}$ reaches an end determination threshold $\theta_{th}$ relative to a reference of "0", the imaginary rack end axial force F3 is kept at "0" that is a neutral angle corresponding to a neutral steering position or a neutral steered position. After the absolute value of the imaginary rack end angle $\theta_{end}$ reaches the end determination threshold $\theta_{th}$, the imaginary rack end axial force F3 is generated, and steeply increases in a direction in which the absolute value of the imaginary rack end axial force F3 increases.

The imaginary rack end axial force F3 is set to have the same sign (positive or negative) as the sign of the imaginary rack end angle $\theta_{end}$. The end determination threshold $\theta_{th}$ is set based on a value in the vicinity of the steering angle $\theta_s$ when the steering wheel 11 reaches the limit position of the operation range or a value in the vicinity of the pinion angle $\theta_p$ when the steering operation shaft 14 reaches the limit position of the movable range.

As illustrated in FIG. 4, the axial force allocation calculation circuit 84 calculates a mixed axial force F4 by summing up a value obtained by multiplying the ideal axial force F1 by an individually set allocation ratio (gain) and a value obtained by multiplying the estimated axial force F2 by an individually set allocation ratio (gain). The allocation ratio is set based on various condition amounts that reflect vehicle behavior, a road condition, or a steering condition. The allocation ratio may be set based only on the vehicle speed V that is one of the condition amounts of the vehicle. In this case, for example, as the vehicle speed V increases, the allocation ratio of the ideal axial force F1 is set to a larger value, and the allocation ratio of the estimated axial force F2 is set to a smaller value. As the vehicle speed V decreases, the allocation ratio of the ideal axial force F1 is set to a smaller value, and the allocation ratio of the estimated axial force F2 is set to a larger value.

The maximum value selection circuit 85 acquires the imaginary rack end axial force F3 calculated by the imaginary rack end axial force calculation circuit 83 and the mixed axial force F4 calculated by the axial force allocation calculation circuit 84. The maximum value selection circuit 85 selects the acquired imaginary rack end axial force F3 or the acquired mixed axial force F4 having a larger absolute value, and sets the selected imaginary rack end axial force F3 or the selected mixed axial force F4 as a final axial force $F_{sp}$ to be used for calculating the spring component $T_{sp}{}^*$ for the input torque $T_{in}{}^*$.

The conversion circuit 86 calculates (by conversion) the spring component $T_{sp}{}^*$ for the input torque $T_{in}{}^*$ based on the final axial force $F_{sp}$ set by the maximum value selection circuit 85.

When the maximum value selection circuit 85 sets the mixed axial force F4 as the final axial force $F_{sp}$, the spring component $T_{sp}^*$ that is based on the final axial force $F_{sp}$ is reflected in the input torque $T_{in}^*$. Thus, the steering reaction force can be applied to the steering wheel 11 in response to the vehicle behavior or the road condition. The driver can grasp the vehicle behavior or the road condition by feeling the steering reaction force via the steering wheel 11 as tactile feedback.

When the maximum value selection circuit 85 sets the imaginary rack end axial force F3 as the final axial force $F_{sp}$, the spring component $T_{sp}^*$ that is based on the final axial force $F_{sp}$ is reflected in the input torque $T_{in}^*$. Thus, the steering reaction force steeply increases. Therefore, it is difficult for the driver to operate the steering wheel 11 in a direction in which the absolute value of the steering angle increases. Accordingly, the driver can recognize that the steering wheel 11 reaches the limit position of the imaginary operation range by acquiring a feeling of abutment as the steering reaction force (tactile feedback).

Next, description is given of actions attained by providing the maximum value selection circuit 85 in the vehicle model 72. As a comparative example, description is first given of a case where the vehicle model 72 employs a configuration in which the maximum value selection circuit 85 is not provided and the final axial force $F_{sp}$ to be used for calculating the spring component $T_{sp}^*$ is calculated by summing up the mixed axial force F4 and the imaginary rack end axial force F3. When this configuration is employed, the following concerns arise.

For example, when the imaginary rack end axial force F3 is calculated because the absolute value of the target steering angle $\theta^*$ serving as the imaginary rack end angle $\theta_{end}$ reaches the end determination threshold $\theta_{th}$, the final axial force $F_{sp}$ to be used for calculating the spring component $T_{sp}^*$ is calculated by adding the imaginary rack end axial force F3 to the mixed axial force F4 as indicated by a long dashed double-short dashed line in a graph of FIG. 7. Therefore, a final axial force $F_{sp}$ having an excessive value and furthermore a spring component $T_{sp}^*$ having an excessive value are calculated. Thus, an excessive steering reaction force may be applied to the driver. This phenomenon is likely to occur, for example, when the imaginary rack end axial force F3 is added in a state in which the allocation ratio of the estimated axial force F2 to the mixed axial force F4 is larger, that is, in a state in which the estimated axial force F2 is dominant as in a case where the vehicle turns with a large radius at a low speed. The reason is as follows. The ratio (slope) of an increase in the estimated axial force F2 to an increase in the absolute value of the target steering angle $\theta^*$ (steering angle $\theta_s$) varies depending on a road condition such as a road frictional resistance. For example, as the road frictional resistance increases and as the steering angle $\theta_s$ increases, the estimated axial force F2 has a larger value.

In this respect, the vehicle model 72 of this embodiment is configured such that the imaginary rack end axial force F3 and the mixed axial force F4 are not summed up when the imaginary rack end axial force F3 is calculated. That is, the maximum value selection circuit 85 sets, as the final axial force $F_{sp}$, the imaginary rack end axial force F3 or the mixed axial force F4 having a larger absolute value. As illustrated in the graph of FIG. 7, consideration is made to a case where the magnitude relationship between the mixed axial force F4 and the imaginary rack end axial force F3 is reversed across an angle $\theta_1$ having an absolute value larger than the absolute value of the end determination threshold $\theta_{th}$ ($\theta_1 > \theta_{th}$). In a range between a point where the absolute value of the target steering angle $\theta^*$ reaches the end determination threshold $\theta_{th}$ and a point where the absolute value of the target steering angle $\theta^*$ reaches the angle $\theta_1$ ($\theta_1 > \theta_{th}$), the absolute value of the mixed axial force F4 is larger than the absolute value of the imaginary rack end axial force F3. Therefore, the mixed axial force F4 is set as the final axial force $F_{sp}$. After the absolute value of the target steering angle $\theta^*$ exceeds the angle $\theta_1$, the absolute value of the imaginary rack end axial force F3 is larger than the absolute value of the mixed axial force F4. Therefore, the imaginary rack end axial force F3 is set as the final axial force $F_{sp}$. Thus, the imaginary rack end axial force F3 is not added to the mixed axial force F4, thereby suppressing the calculation of a final axial force $F_{sp}$ having an excessive value. Accordingly, the application of an excessive steering reaction force to the driver is suppressed.

According to the first embodiment, the following effects can be attained. (1) When the imaginary rack end axial force F3 is calculated, the imaginary rack end axial force F3 or the mixed axial force F4 having a larger absolute value is set as the final axial force $F_{sp}$ to be used for calculating the spring component $T_{sp}^*$. Since the imaginary rack end axial force F3 is not added to the mixed axial force F4, it is possible to reduce the occurrence of the case where the final axial force $F_{sp}$ has an excessive value. Thus, it is possible to reduce driver's discomfort due to the application of an excessive steering reaction force to the driver.

In particular, this embodiment is more effective as the ratio of the estimated axial force F2 to the mixed axial force F4 increases and as the value of the estimated axial force F2 increases. The situation in which the imaginary rack end axial force F3 is calculated and the situation in which the ratio of the estimated axial force F2 to the mixed axial force F4 is larger (the estimated axial force F2 is dominant) are equivalent to each other, as typified by the case where the vehicle turns with a large radius at a low speed. When the vehicle model 72 employs the configuration in which the imaginary rack end axial force F3 is added to the mixed axial force F4, the imaginary rack end axial force F3 is added to the mixed axial force F4 having a larger value. Therefore, the value of the final axial force $F_{sp}$ is likely to increase excessively. In this embodiment, the imaginary rack end axial force F3 is not added to the mixed axial force F4. Therefore, it is possible to reduce the occurrence of the case where the final axial force $F_{sp}$ has an excessive value.

(2) It is appropriate that the ideal axial force map M1 and the imaginary rack end map M2 be set individually without mutual adjustment. For example, when the imaginary rack end axial force F3 is added to the mixed axial force F4, characteristics of the ideal axial force map M1 and the imaginary rack end map M2 may be adjusted so that the final axial force $F_{sp}$ does not have an excessive value. In this embodiment, the imaginary rack end axial force F3 or the mixed axial force F4 having a larger absolute value is used as the final axial force $F_{sp}$. Therefore, there is no need to perform an operation of adjusting the map characteristics (operation of elaborating the maps) in consideration of the final axial force $F_{sp}$. Thus, the operation of setting the ideal axial force map M1 and the imaginary rack end map M2 is simplified.

In this embodiment, the ideal axial force calculation circuit 81 and the estimated axial force calculation circuit 82 constitute a steering range axial force calculation circuit. The steering range axial force calculation circuit is a functional part configured to calculate a steering range axial force based on a condition amount of the vehicle. The steering range axial force is an axial force applied to the steering operation shaft 14 when the steering wheel 11 is operated within an operation range defined as a normally operative steering range. In this embodiment, the ideal axial force F1 and the estimated axial force F2 correspond to the steering range axial force.

The imaginary rack end axial force calculation circuit 83 constitutes a limiting axial force calculation circuit. The limiting axial force calculation circuit is a functional part configured to calculate a limiting axial force as the axial force of the steering operation shaft 14 based on a condition amount of the vehicle in which a steering condition or a steered condition of each of the steered wheels 16 and 16 is reflected. The limiting axial force is an axial force to be calculated in order to imaginarily limit the operation for the steering wheel. In this embodiment, the imaginary rack end axial force F3 corresponds to the limiting axial force.

The imaginary rack end axial force calculation circuit 83 constitutes a range limiting axial force calculation circuit. The range limiting axial force calculation circuit is a functional part configured to calculate a range limiting axial force for limiting the operation range of the steering wheel 11 to an imaginary operation range based on a condition amount that reflects the steering condition or the steered condition of each of the steered wheels 16 and 16. In this embodiment, the imaginary rack end axial force F3 corresponds to the range limiting axial force.

Next, description is given of a steering control apparatus according to a second embodiment, which is applied to the steer-by-wire type steering system. This embodiment provides a configuration basically similar to that of the first embodiment described above with reference to FIG. 1 to FIG. 4.

Depending on, for example, specifications of the steering system 10 or the control apparatus 50, there is a demand that the steering reaction force convey, to the driver, situations other than the situation in which the steering wheel 11 reaches the limit position of the imaginary operation range. Examples of the situation that needs to be conveyed to the driver may include the following two situations (A1) and (A2).

(A1) A situation in which the steered wheels 16 and 16 abut against obstacles such as curbstones when the vehicle starts to travel in a stopped state.

(A2) A situation in which the steered angle $\theta_w$ of each of the steered wheels 16 and 16 (pinion angle $\theta_p$) cannot follow the target value because a current to be supplied to the steering operation motor 41 and furthermore a torque to be generated by the steering operation motor 41 are limited to values smaller than original values (insufficient) due to, for example, insufficient electric power of an on-board battery.

In this embodiment, the vehicle model 72 employs the following configuration in order that the steering reaction force convey the two situations (A1) and (A2) to the driver.

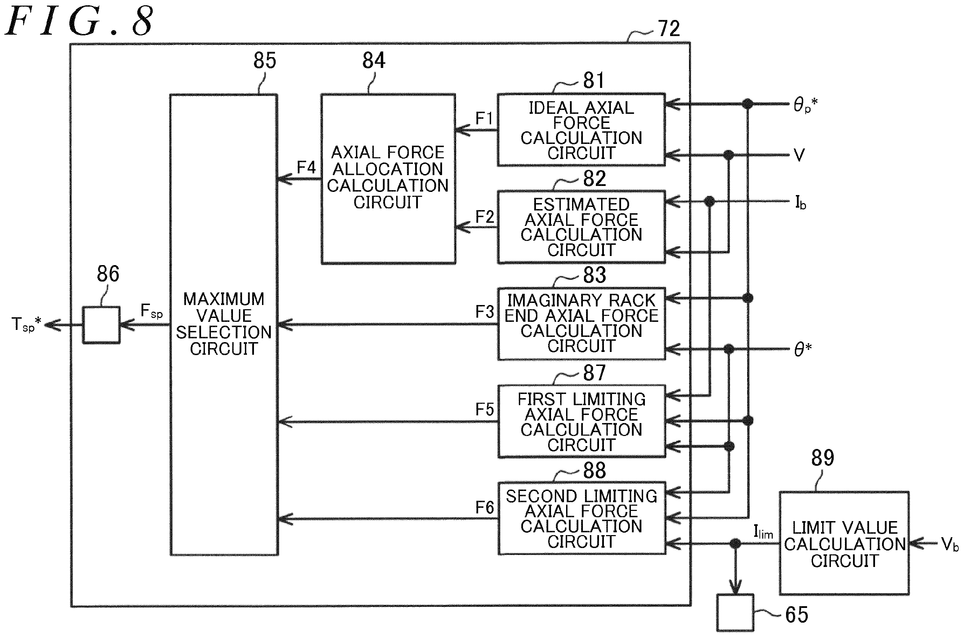

As illustrated in FIG. 8, the vehicle model 72 is provided with a first limiting axial force calculation circuit 87 and a second limiting axial force calculation circuit 88 in addition to the ideal axial force calculation circuit 81, the estimated axial force calculation circuit 82, the imaginary rack end axial force calculation circuit 83, the axial force allocation calculation circuit 84, the maximum value selection circuit 85, and the conversion circuit 86.

The first limiting axial force calculation circuit 87 calculates a first limiting axial force F5 for limiting a further turning operation under the situation in which the steered wheels 16 and 16 abut against obstacles. The first limiting axial force calculation circuit 87 calculates the first limiting axial force F5 based on the current value $I_b$ of the steering operation motor 41, the target steering angle $\theta^*$, and the target pinion angle $\theta_p{}^*$.

The second limiting axial force calculation circuit 88 calculates a second limiting axial force F6 for limiting a further turning operation under the situation in which the current to be supplied to the steering operation motor 41, that is, the torque to be generated by the steering operation motor 41 is limited to a value smaller than the original value. The second limiting axial force calculation circuit 88 calculates the second limiting axial force F6 based on the target steering angle $\theta^*$, the target pinion angle $\theta_p{}^*$, and a limit value $I_{lim}$ of the current to be supplied to the steering operation motor 41.

The limit value $I_{lim}$ is calculated by a limit value calculation circuit 89 provided in the control apparatus 50. When a voltage $V_b$ of the on-board battery (power supply voltage of the vehicle) reaches a value smaller than a voltage threshold, the limit value calculation circuit 89 calculates a limit value $I_{lim}$ smaller than a rated current value (original value) of the steering operation motor 41. The limit value calculation circuit 89 calculates a limit

value $I_{lim}$ having a smaller absolute value in response to a decrease in the absolute value of the voltage $V_b$.

The limit value $I_{lim}$ is also supplied to the energization control circuit 65 of the steering operation control circuit 50b. When the limit value calculation circuit 89 calculates the limit value $I_{lim}$, the energization control circuit 65 compares the absolute value of the current to be supplied to the steering operation motor 41 with the limit value $I_{lim}$. When the absolute value of the current to be supplied to the steering operation motor 41 is larger than the limit value $I_{lim}$, the energization control circuit 65 limits the absolute value of the current to be supplied to the steering operation motor 41 to the limit value $I_{lim}$. Thus, the torque to be generated by the steering operation motor 41 is limited to a torque that is based on the limit value $I_{lim}$. When the absolute value of the current to be supplied to the steering operation motor 41 is equal to or smaller than the limit value $I_{lim}$, the energization control circuit 65 supplies, to the steering operation motor 41, the original current calculated through the feedback control of the current value $I_b$. The torque to be generated by the steering operation motor 41 is not limited, but is kept as the original torque.

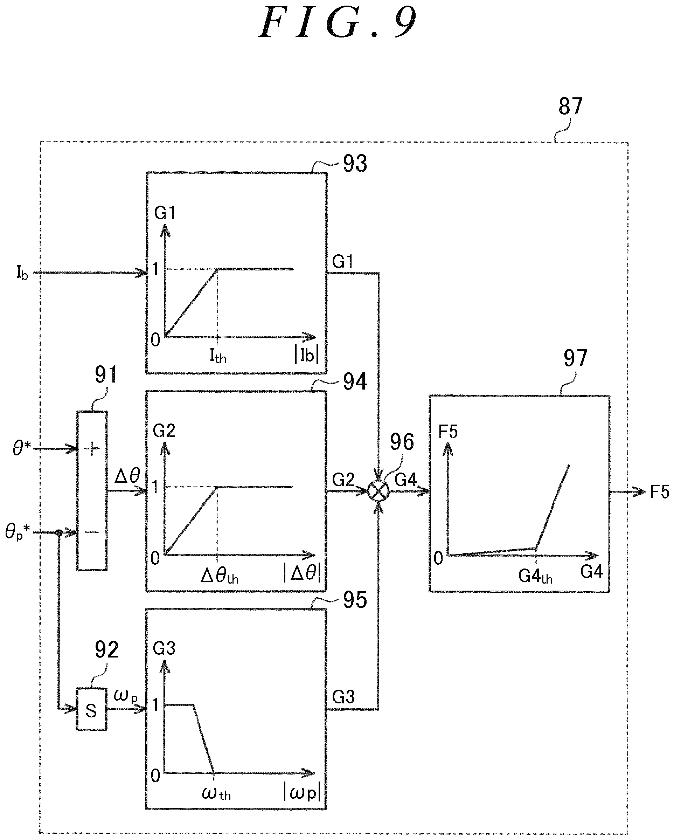

Next, the first limiting axial force calculation circuit 87 is described in detail. As illustrated in FIG. 9, the first limiting axial force calculation circuit 87 includes a subtractor 91, a differentiator 92, a current gain calculation circuit 93, an angle gain calculation circuit 94, a velocity gain calculation circuit 95, a multiplier 96, and an axial force calculation circuit 97.

The subtractor 91 calculates an angular deviation $\Delta\theta$ by subtracting the target pinion angle $\theta_p^*$ from the target steering angle $\theta^*$. The differentiator 92 calculates a pinion angle velocity $\omega_p$ by differentiating the target pinion angle $\theta_p^*$.

The current gain calculation circuit 93 calculates a current gain G1 based on the current value $I_b$ of the steering operation motor 41. The current gain calculation circuit 93 calculates a current gain G1 having a larger value as the absolute value of the current value $I_b$ of the steering operation motor 41 increases from "0". After the absolute value of the current value $I_b$ of the steering operation motor 41 reaches a current threshold $I_{th}$, the current gain calculation circuit 93 sets the value of the current gain G1 to "1" irrespective of the absolute value of the current value $I_b$ of the steering operation motor 41. The current threshold $I_{th}$ is set through an experiment or simulation based on a current value when the steering operation motor 41 generates a sufficient torque to turn the steered wheels 16 and 16 if the steered wheels 16 and 16 do not abut against obstacles.

The current gain G1 is a value indicating the degree of likelihood of the situation in which the steered wheels 16 and 16 abut against obstacles. That is, the absolute value of the current value $I_b$ of the steering operation motor 41 increases as an attempt is made to turn the steered wheels 16 and 16 further in the situation in which the steered wheels 16 and 16 abut against obstacles. Therefore, there is a higher probability that the steered wheels 16 and 16 abut against obstacles as the absolute value of the current value $I_b$ of the steering operation motor 41 increases. It is estimated that the steered wheels 16 and 16 abut against obstacles when the current value $I_b$ of the steering operation motor 41 is equal to or larger than the current threshold $I_{th}$.

The angle gain calculation circuit 94 calculates an angle gain G2 based on the absolute value of the angular deviation $\Delta\theta$. The angle gain calculation circuit 94 calculates an angle gain G2 having a larger value as the absolute value of the angular deviation $\Delta\theta$ increases from "0". After the absolute value of the angular deviation $\Delta\theta$ reaches an angular deviation threshold $\Delta\theta_{th}$, the angle gain calculation circuit 94 sets the value of the angle gain G2 to "1" irrespective of the absolute value of the angular deviation $\Delta\theta$.

The angle gain G2 is also a value indicating the degree of likelihood of the situation in which the steered wheels 16 and 16 abut against obstacles. That is, the deviation between the target steering angle $\theta^*$ and the target pinion angle $\theta_p^*$ increases as an attempt is made to turn the steered wheels 16 and 16 further in the situation in which the steered wheels 16 and 16 abut against obstacles. Therefore, there is a higher probability that the steered wheels 16 and 16 abut against obstacles as the absolute value of the angular deviation $\Delta\theta$ increases. It is estimated that the steered wheels 16 and 16 abut against obstacles when the angular deviation $\Delta\theta$ is equal to or larger than the angular deviation threshold $\Delta\theta_{th}$. The angular deviation threshold $\Delta\theta_{th}$ is set through an experiment or simulation in advance in consideration of a tolerance due to, for example, noise of the rotation angle sensors 33 and 43.

The velocity gain calculation circuit 95 calculates a velocity gain G3 based on the absolute value of the pinion angle velocity $\omega_p$. The velocity gain calculation circuit 95 sets the value of the velocity gain G3 to "1" when the absolute value of the pinion angle velocity $\omega_p$ falls within a range from "0" to a predetermined value. After the absolute value of the pinion angle velocity $\omega_p$ reaches the predetermined value, the velocity gain calculation circuit 95 steeply reduces the value of the velocity gain G3 relative to an increase in the absolute value of the pinion angle velocity $\omega_p$. After the absolute value of the pinion angle velocity $\omega_p$ reaches a velocity threshold $\omega_{th}$, the velocity gain calculation circuit 95 sets the value of the velocity gain G3 to "0" irrespective of the absolute value of the pinion angle velocity $\omega_p$.

The velocity gain G3 is also a value indicating the degree of likelihood of the situation in which the steered wheels 16 and 16 abut against obstacles. That is, it is difficult to turn the steered wheels 16 and 16 under the situation in which the steered wheels 16 and 16 abut against obstacles. Therefore, there is a higher probability that the steered wheels 16 and 16 abut against obstacles as the steered speed of each of the steered wheels 16 and 16 and furthermore the absolute value of the pinion

angle velocity $\omega_p$ decrease. It is estimated that the steered wheels 16 and 16 abut against obstacles when the pinion angle velocity $\omega_p$ is equal to or smaller than the predetermined value. The velocity threshold $\omega_{th}$ is set through an experiment or simulation in advance in consideration of a tolerance due to, for example, noise of the rotation angle sensor 43.

The multiplier 96 calculates an obstacle abutment gain G4 by multiplying together the current gain G1 calculated by the current gain calculation circuit 93, the angle gain G2 calculated by the angle gain calculation circuit 94, and the velocity gain G3 calculated by the velocity gain calculation circuit 95. The obstacle abutment gain G4 is a value obtained as a result of comprehensively considering, based on the current value $I_b$ of the steering operation motor 41, the angular deviation $\Delta\theta$, and the pinion angle velocity $\omega_p$, the degree of likelihood of the situation in which the steered wheels 16 and 16 abut against obstacles.

The axial force calculation circuit 97 calculates the first limiting axial force F5 based on the obstacle abutment gain G4. When the value of the obstacle abutment gain G4 falls within a range from "0" to a gain threshold $G4_{th}$, the axial force calculation circuit 97 gently increases the first limiting axial force F5 relative to an increase in the obstacle abutment gain G4. After the obstacle abutment gain G4 reaches the gain threshold $G4_{th}$, the axial force calculation circuit 97 steeply increases the first limiting axial force F5 relative to the increase in the obstacle abutment gain G4. The gain threshold $G4_{th}$ is set through an experiment or simulation in advance as a value at which determination may be made that the steered wheels 16 and 16 abut against obstacles. The first limiting axial force F5 is set from the viewpoint of generating a sufficient steering reaction force to cause difficulty in the driver's turning operation.

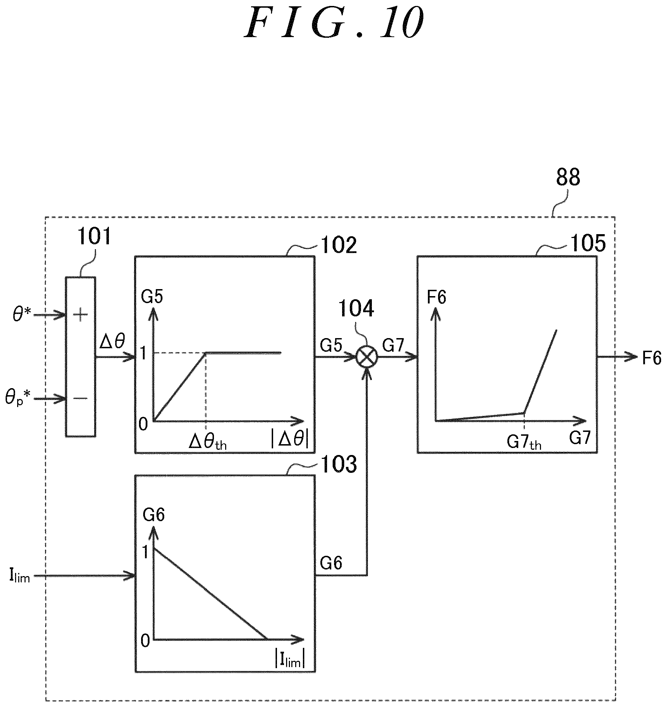

Next, the second limiting axial force calculation circuit 88 is described in detail. As illustrated in FIG. 10, the second limiting axial force calculation circuit 88 includes a subtractor 101, an angle gain calculation circuit 102, a limit value gain calculation circuit 103, a multiplier 104, and an axial force calculation circuit 105.

The subtractor 101 calculates an angular deviation $\Delta\theta$ by subtracting the target pinion angle $\theta_p^*$ from the target steering angle $\theta^*$. The angle gain calculation circuit 102 has a calculation function basically similar to that of the angle gain calculation circuit 94 of the first limiting axial force calculation circuit 87. The angle gain calculation circuit 102 calculates an angle gain G5 based on the absolute value of the angular deviation $\Delta\theta$. The relationship between the absolute value of the angular deviation $\Delta\theta$ and the angle gain G5 in the angle gain calculation circuit 102 is the same as the relationship between the absolute value of the angular deviation $\Delta\theta$ and the angle gain G2 in the angle gain calculation circuit 94.

The angle gain G5 is a value indicating the degree of likelihood of the situation in which the current to be supplied to the steering operation motor 41 is limited. That is, it is difficult to sufficiently turn the steered wheels 16 and 16 under the situation in which the current to be supplied to the steering operation motor 41 is limited. Therefore, the deviation between the target steering angle $\theta^*$ and the target pinion angle $\theta_p^*$ increases as an attempt is made to turn the steered wheels 16 and 16 further. Thus, there is a higher probability of the situation in which the current to be supplied to the steering operation motor 41 is limited as the absolute value of the angular deviation $\Delta\theta$ increases. It is estimated that the current to be supplied to the steering operation motor 41 is limited when the angular deviation $\Delta\theta$ is equal to or larger than an angular deviation threshold $\Delta\theta_{th}$.

The limit value gain calculation circuit 103 calculates a limit value gain G6 based on the limit value $I_{lim}$ calculated by the limit value calculation circuit 89. The limit value $I_{lim}$ is a limit value of the current to be supplied to the steering operation motor 41. The limit value gain calculation circuit 103 calculates a limit value gain G6 having a smaller value as the absolute value of the limit value $I_{lim}$ increases. The limit value $I_{lim}$ is a value ranging from "1" to "0".

The limit value gain G6 is also a value indicating the degree of likelihood of the situation in which the current to be supplied to the steering operation motor 41 is limited. That is, the absolute value of the limit value $I_{lim}$ is set to a smaller value as the absolute value of the current to be supplied to the steering operation motor 41 is limited to a smaller value. Therefore, there is a higher probability of the situation in which the absolute value of the current to be supplied to the steering operation motor 41 is limited to a smaller value as the absolute value of the limit value $I_{lim}$ decreases.

The multiplier 104 calculates a steering operation current gain G7 by multiplying together the angle gain G5 calculated by the angle gain calculation circuit 102 and the limit value gain G6 calculated by the limit value gain calculation circuit 103. The steering operation current gain G7 is a value obtained as a result of comprehensively considering, based on the angular deviation $\Delta\theta$ and the limit value $I_{lim}$, the degree of likelihood of the situation in which the current to be supplied to the steering operation motor 41 is limited.

The axial force calculation circuit 105 has a calculation function basically similar to that of the axial force calculation circuit 97 of the first limiting axial force calculation circuit 87. The axial force calculation circuit 105 calculates the second limiting axial force F6 based on the steering operation current gain G7. The relationship between the steering operation current gain G7 and the second limiting axial force F6 in the axial force calculation circuit 105 is the same as the relationship between the obstacle abutment gain G4 and the first limiting axial force F5 in the axial force calculation circuit 97. After the steering operation current gain G7 reaches a gain threshold $G7_{th}$, the axial force calculation circuit 105 steeply increases the second limiting axial force F6 relative to an increase in the steering operation current gain G7.

Next, actions of the second embodiment are described. As illustrated in FIG. 8, the maximum value selection circuit 85 acquires the first limiting axial force F5 calculated by the first limiting axial force calculation circuit 87 and the second limiting axial force F6 calculated by the second limiting axial force calculation circuit 88 in addition to the imaginary rack end axial force F3 calculated by the imaginary rack end axial force calculation circuit 83 and the mixed axial force F4 calculated by the axial force allocation calculation circuit 84. The maximum value selection circuit 85 selects an axial force having the largest absolute value among the acquired imaginary rack end axial force F3, the acquired mixed axial force F4, the acquired first limiting axial force F5, and the acquired second limiting axial force F6, and sets the selected axial force as the final axial force $F_{sp}$ to be used for calculating the spring component $T_{sp}^{*}$ for the input torque $T_{in}^{*}$.

The conversion circuit 86 calculates (by conversion) the spring component $T_{sp}^{*}$ for the input torque $T_{in}^{*}$ based on the final axial force $F_{sp}$ set by the maximum value selection circuit 85.

When the maximum value selection circuit 85 sets the mixed axial force F4 as the final axial force $F_{sp}$, the spring component $T_{sp}^{*}$ that is based on the final axial force $F_{sp}$ is reflected in the input torque $T_{in}^{*}$. Thus, the steering reaction force can be applied to the steering wheel 11 in response to the vehicle behavior or the road condition. The driver can grasp the vehicle behavior or the road condition by feeling the steering reaction force via the steering wheel 11 as tactile feedback.

When the maximum value selection circuit 85 sets the imaginary rack end axial force F3 as the final axial force $F_{sp}$, the spring component $T_{sp}^{*}$ that is based on the final axial force $F_{sp}$ is reflected in the input torque $T_{in}^{*}$. Thus, the steering reaction force steeply increases. Therefore, it is difficult for the driver to operate the steering wheel 11 in a direction in which the absolute value of the steering angle $\theta_s$ increases. Accordingly, the driver can recognize that the steering wheel 11 reaches the limit position of the imaginary operation range by acquiring a feeling of abutment as the steering reaction force.

When the maximum value selection circuit 85 sets the first limiting axial force F5 as the final axial force $F_{sp}$, the spring component $T_{sp}^{*}$ that is based on the final axial force $F_{sp}$ is reflected in the input torque $T_{in}^{*}$. Thus, the steering reaction force steeply increases. Therefore, it is difficult for the driver to operate the steering wheel 11 in a direction in which the absolute value of the steering angle $\theta_s$ increases. Accordingly, the driver can recognize the situation in which the steered wheels 16 and 16 abut against obstacles such as curbstones by acquiring a feeling of abutment as the steering reaction force.

When the maximum value selection circuit 85 sets the second limiting axial force F6 as the final axial force $F_{sp}$, the spring component $T_{sp}^{*}$ that is based on the final axial force $F_{sp}$ is reflected in the input torque $T_{in}^{*}$.

Thus, the steering reaction force steeply increases. Therefore, it is difficult for the driver to operate the steering wheel 11 in a direction in which the absolute value of the steering angle $\theta_s$ increases. Accordingly, the driver can recognize the situation in which the current to be supplied to the steering operation motor 41 and furthermore the torque to be generated by the steering operation motor 41 are limited by acquiring a feeling of abutment as the steering reaction force.

According to the second embodiment, the following effects can be attained.

(3) The maximum value selection circuit 85 sets an axial force having the largest absolute value among the imaginary rack end axial force F3, the mixed axial force F4, the first limiting axial force F5, and the second limiting axial force F6 as the final axial force $F_{sp}$ to be used for calculating the spring component $T_{sp}^{*}$. This configuration suppresses the calculation of a final axial force $F_{sp}$ having an excessive value unlike the case of employing the configuration in which the final axial force $F_{sp}$ to be used for calculating the spring component $T_{sp}^{*}$ is obtained by summing up the imaginary rack end axial force F3, the mixed axial force F4, the first limiting axial force F5, and the second limiting axial force F6. That is, the application of an excessive steering reaction force to the driver is suppressed. Thus, it is possible to reduce discomfort due to the application of an excessive steering reaction force to the driver via the steering wheel 11.

In the case of employing the configuration in which the final axial force $F_{sp}$ to be used for calculating the spring component $T_{sp}^{*}$ is calculated by adding the imaginary rack end axial force F3, the first limiting axial force F5, and the second limiting axial force F6 to the mixed axial force F4, it is more likely that a final axial force $F_{sp}$ having an excessive value is calculated. For example, both the imaginary rack end axial force F3 and the first limiting axial force F5 may be added to the mixed axial force F4 when the steered wheels 16 and 16 abut against obstacles such as curbstones in a state in which the absolute value of the target steering angle $\theta^{*}$ serving as the imaginary rack end angle $\theta_{end}$ reaches a value in the vicinity of the end determination threshold $\theta_{th}$. In this case, the final axial force $F_{sp}$ is likely to have a larger value.

In this embodiment, the ideal axial force calculation circuit 81 and the estimated axial force calculation circuit 82 constitute the steering range axial force calculation circuit configured to calculate the steering range axial force. In this embodiment, the ideal axial force F1 and the estimated axial force F2 correspond to the steering range axial force.

The imaginary rack end axial force calculation circuit 83, the first limiting axial force calculation circuit 87, and the second limiting axial force calculation circuit 88 constitute the limiting axial force calculation circuit configured to calculate the limiting axial force. In this embodiment, the imaginary rack end axial force F3, the first limiting axial force F5, and the second limiting axial force F6 correspond to the limiting axial force.

The imaginary rack end axial force calculation circuit 83 constitutes the range limiting axial force calculation circuit configured to calculate the range limiting axial force. In this embodiment, the imaginary rack end axial force F3 corresponds to the range limiting axial force.

The first limiting axial force calculation circuit 87 and the second limiting axial force calculation circuit 88 constitute an operation limiting axial force calculation circuit. The operation limiting axial force calculation circuit is a functional part configured to calculate an operation limiting axial force for imaginarily limiting the operation of the steering wheel 11 in the situation in which the steering operation for the steered wheels 16 and 16 is limited. In this embodiment, the first limiting axial force F5 and the second limiting axial force F6 correspond to the operation limiting axial force.

The first and second embodiments may be modified as follows.

In the first and second embodiments, the target steering reaction force calculation circuit 51 determines the target steering reaction force $T_1^*$ based on the steering torque $T_h$ and the vehicle speed V, but may determine the target steering reaction force $T_1^*$ based only on the steering torque $T_h$.

In the first and second embodiments, the target steering angle calculation circuit 52 calculates the target steering angle $\theta^*$ of the steering wheel 11 by using the input torque $T_{in}^*$ that is the sum of the target steering reaction force $T_1^*$ and the steering torque $T_h$, but may calculate the target steering angle $\theta^*$ of the steering wheel 11 by using only the steering torque $T_h$ or only the target steering reaction force $T_1^*$ as the input torque $T_{in}^*$.

In the first and second embodiments, the control apparatus 50 may employ a configuration in which the differentiation steering control circuit 63 is omitted. In this case, the pinion angle feedback control circuit 64 acquires the target pinion angle $\theta_p^*$ calculated by the steering angle ratio change control circuit 62, and executes feedback control of the pinion angle $\theta_p$ so that the actual pinion angle $\theta_p$ follows the acquired target pinion angle $\theta_p^*$.

In the first and second embodiments, the control apparatus 50 may employ a configuration in which both the differentiation steering control circuit 63 and the steering angle ratio change control circuit 62 are omitted. In this case, the target steering angle $\theta^*$ calculated by the target steering angle calculation circuit 52 is directly used as the target pinion angle ($\theta_p^*$). That is, the steered wheels 16 and 16 are turned by an amount corresponding to the amount of operation for the steering wheel 11.

In the first and second embodiments, the ideal axial force calculation circuit 81 calculates the ideal axial force F1 based on the target pinion angle $\theta_p^*$ and the vehicle speed V, but the vehicle speed V need not essentially be taken into consideration when the ideal axial force F1 is calculated. The ideal axial force F1 may be determined by using, in place of the target pinion angle

$\theta_p^*$, a target steered angle obtained by multiplying the target pinion angle $\theta_p^*$ by a predetermined conversion coefficient.

In the first and second embodiments, the estimated axial force calculation circuit 82 calculates the estimated axial force F2 based on the current value $I_b$ of the steering operation motor 41, but may estimate and calculate an axial force applied to the steering operation shaft 14 based on, for example, a lateral acceleration or a yaw rate detected through an on-board sensor. For example, the estimated axial force may be determined by multiplying the lateral acceleration by a gain that is a coefficient based on the vehicle speed V. The lateral acceleration reflects a road condition such as a road frictional resistance or vehicle behavior, and therefore the estimated axial force calculated based on the lateral acceleration reflects the actual road condition. The estimated axial force may also be determined by multiplying together a yaw rate derivative that is a value obtained by differentiating the yaw rate and a vehicle speed gain that is a coefficient based on the vehicle speed V. The yaw rate also reflects a road condition such as a road frictional resistance or vehicle behavior, and therefore the estimated axial force calculated based on the yaw rate reflects the actual road condition.

In the first and second embodiments, the imaginary rack end axial force calculation circuit 83 may calculate the imaginary rack end axial force F3 by using the steering angle $\theta_s$ and the pinion angle $\theta_p$ in place of the target steering angle $\theta^*$ and the target pinion angle $\theta_p^*$. In this case, the imaginary rack end axial force calculation circuit 83 uses the steering angle $\theta_s$ or the pinion angle $\theta_p$ having a larger absolute value as the imaginary rack end angle $\theta_{end}$ for the calculation of the imaginary rack end axial force F3.

In the second embodiment, the subtractor 91 of the first limiting axial force calculation circuit 87 and the subtractor 101 of the second limiting axial force calculation circuit 88 calculate the angular deviation $\Delta\theta$ by subtracting the target pinion angle $\theta_p^*$ from the target steering angle $\theta^*$, but may calculate the angular deviation $\Delta\theta$ by subtracting the pinion angle $\theta_p$ from the steering angle $\theta_s$. The subtractors 91 and 101 may also calculate the angular deviation $\Delta\theta$ by subtracting, from the target steering angle $\theta^*$, a steered angle obtained by multiplying the pinion angle $\theta_p$ by a predetermined conversion coefficient.

In the second embodiment, the differentiator 92 of the first limiting axial force calculation circuit 87 calculates the pinion angle velocity $\omega_p$ by differentiating the target pinion angle $\theta p^*$, but may calculate the pinion angle velocity $\omega_p$ by differentiating the pinion angle $\theta_p$.

In the first and second embodiments, the vehicle model 72 may employ a configuration in which the ideal axial force calculation circuit 81 and the axial force allocation calculation circuit 84 are omitted. In this case, the estimated axial force F2 calculated by the estimated axial force calculation circuit 82 is directly used as the

final axial force $F_{sp}$. In the first embodiment, the vehicle model 72 may employ a configuration in which at least one of the first limiting axial force calculation circuit 87 and the second limiting axial force calculation circuit 88 is provided in place of the imaginary rack end axial force calculation circuit 83. In the second embodiment, the vehicle model 72 may employ a configuration in which the first limiting axial force calculation circuit 87 or the second limiting axial force calculation circuit 88 is omitted.

In the first and second embodiments, the control apparatus 50 calculates the steering reaction force command value $T^*$ by adding the steering angle correction amount $T_2^*$ to the target steering reaction force $T_1^*$, but may use the steering angle correction amount $T_2^*$ as the steering reaction force command value $T^*$. In this case, the control apparatus 50 can employ a configuration in which the adder 55 is omitted. The target steering reaction force $T_1^*$ calculated by the target steering reaction force calculation circuit 51 is supplied to the target steering angle calculation circuit 52 alone. The steering angle correction amount $T_2^*$ calculated by the steering angle feedback control circuit 54 as the steering reaction force command value $T^*$ is supplied to the energization control circuit 56.

In the first and second embodiments, the steering system 10 may be provided with a clutch. In this case, the steering shaft 12 and the pinion shaft 13 are coupled together via a clutch 21 as indicated by long dashed double-short dashed lines in FIG. 1. An electromagnetic clutch is employed as the clutch 21. The electromagnetic clutch connects and disconnects power through connection and disconnection of electric power for an exciting coil. The control apparatus 50 executes engagement/disengagement control for switching engagement and disengagement of the clutch 21. When the clutch 21 is disengaged, power transmission between the steering wheel 11 and each of the steered wheels 16 and 16 is disconnected mechanically. When the clutch 21 is engaged, the power transmission between the steering wheel 11 and each of the steered wheels 16 and 16 is connected mechanically.

The control apparatus 50 of each of the first and second embodiments may be applied to a control apparatus for an electric power steering system (EPS) configured to apply a torque of a motor to the steering mechanism of the vehicle as an assist force. The type of the EPS may be a type in which the assist force is applied to a steering shaft having a pinion shaft that meshes with the steering operation shaft, or a type in which the assist force is applied to the steering operation shaft via a pinion shaft provided independently of the steering shaft. The control apparatus for the EPS controls the motor based on a command value calculated depending on a steering condition. The command value indicates a torque to be generated in the motor. The control apparatus for the EPS may calculate an axial force of the steering operation shaft to be reflected in the command value through execution of feedback control for causing the pinion angle (steered angle) to follow the target pinion angle (target steered angle). The control apparatus for the EPS may also have a function of executing first control for imaginarily limiting the operation range of the steering wheel 11, second control for limiting the turning operation under the situation in which the steered wheels 16 and 16 abut against obstacles such as curbstones, or third control for limiting the turning operation under the situation in which the current to be supplied to the steering operation motor 41 is limited. When at least one of the first control to the third control is executed, there may occur a situation in which an excessive steering reaction force is applied to the steering wheel 11.

**Claims**

1. A steering control apparatus configured to control a motor (31, 41) based on a command value ($T^*$, $T_p^*$) calculated depending on a steering condition, the motor being configured to generate a driving force to be applied to a steering mechanism of a vehicle including a steering operation shaft (14) configured to turn a steered wheel (16), the steering control apparatus comprising:

   a steering range axial force calculation circuit (81, 82) configured to calculate a steering range axial force (F1, F2) based on a condition amount of the vehicle, the steering range axial force being an axial force applied to the steering operation shaft when a steering wheel (11) is operated within a defined operation range; and
   a limiting axial force calculation circuit (83, 87, 88) configured to calculate a limiting axial force (F3) as an axial force of the steering operation shaft based on a condition amount of the vehicle in which the steering condition or a steered condition of the steered wheel (16) is reflected, so as to imaginarily limit an operation of the steering wheel (11); **characterized by comprising**
   a selection circuit (85) configured to select an axial force having a largest absolute value out of the steering range axial force and the limiting axial force (F3) as an axial force ($F_{sp}$) to be reflected in the command value.

2. The steering control apparatus according to claim 1, wherein the limiting axial force calculation circuit includes:

   a range limiting axial force calculation circuit (83) configured to calculate a range limiting axial force (F3) as the limiting axial force so as to limit the operation range of the steering wheel to an imaginary operation range; and
   an operation limiting axial force calculation circuit (87, 88) configured to calculate an operation limiting axial force (F5, F6) as the limiting axial force so as to imaginarily limit the operation of the steering wheel in a situation in which a steering operation for the steered wheel (16) is limited.

3. The steering control apparatus according to claim 2, wherein the operation limiting axial force calculation circuit includes a first limiting axial force calculation circuit (87) configured to calculate a first limiting axial force (F5) as the limiting axial force so as to imaginarily limit the operation of the steering wheel in a situation in which the steered wheel (16) abuts against an obstacle.

4. The steering control apparatus according to claim 2 or 3, wherein
on a premise that the steering mechanism has a structure (21) that achieves separation in power transmission between the steering wheel (11) and the steered wheel (16) or a structure that allows connection and disconnection of the power transmission between the steering wheel and the steered wheel, and that the steering mechanism is provided with a reaction motor (31) serving as the motor and configured to generate, as the driving force, a steering reaction force that is a force to be applied in a direction opposite to an operation direction of the steering wheel, and a steering operation motor (41) serving as the motor and configured to apply, to the steering operation shaft (14), a steering operation force that is a force for turning the steered wheel,
the operation limiting axial force calculation circuit includes a second limiting axial force calculation circuit (88) configured to calculate a second limiting axial force (F6) as the limiting axial force so as to imaginarily limit the operation of the steering wheel in a situation in which a torque of the steering operation motor is limited in comparison with an original torque.

5. The steering control apparatus according to any one of claims 1 to 4, wherein the steering range axial force calculation circuit (81, 82) includes an estimated axial force calculation circuit (82) configured to calculate the axial force of the steering operation shaft (14) as an estimated axial force (F2) based on a condition amount ($I_b$) that reflects a road condition or vehicle behavior.

6. The steering control apparatus according to claim 5, further comprising:

> an ideal axial force calculation circuit (81) configured to calculate an ideal axial force (F1) based on a target rotation angle ($\theta_p{}^*$) of a rotating body (44) configured to rotate in association with the steering operation for the steered wheel (16), the target rotation angle being calculated depending on the steering condition; and
an allocation calculation circuit (84) configured to calculate a mixed axial force (F4) as a final steering range axial force ($F_{sp}$) by summing up a value obtained by multiplying the estimated axial force (F2) by an allocation ratio and a value obtained by multiplying the ideal axial force (F1) by an allocation ratio, the allocation ratios being set individually depending on the condition amount that reflects the vehicle behavior or the road condition or depending on the steering condition.

**Patentansprüche**

1. Lenksteuervorrichtung, die so konfiguriert ist, dass sie einen Motor (31, 41) basierend auf einem in Abhängigkeit von einem Lenkungszustand berechneten Befehlswert ($T^*$, $T_p{}^*$) steuert, wobei der Motor so konfiguriert ist, dass er eine Antriebskraft erzeugt, die auf einen Lenkmechanismus eines Fahrzeugs einschließlich einer Lenkbetätigungswelle (14) auszuüben ist, die so konfiguriert ist, um ein gelenktes Rad (16) zu drehen, wobei die Lenksteuervorrichtung:

> eine Lenkbereichsaxialkraftberechnungsschaltung (81, 82), die so konfiguriert ist, dass sie eine Lenkbereichsaxialkraft (F1, F2) basierend auf einem Zustandsbetrag des Fahrzeugs berechnet, wobei die Lenkbereichsaxialkraft eine Axialkraft darstellt, die auf die Lenkbetätigungswelle ausgeübt wird, wenn ein Lenkrad (11) innerhalb eines definierten Betätigungsbereichs betätigt wird; und
> eine Begrenzungsaxialkraftberechnungsschaltung (83, 87, 88) aufweist, die so konfiguriert ist, dass sie eine Begrenzungsaxialkraft (F3) als eine Axialkraft der Lenkbetätigungswelle basierend auf einem Zustandsbetrag des Fahrzeugs berechnet, in dem der Lenkzustand oder ein gelenkter Zustand des gelenkten Rades (16) wiederspiegelt ist, um eine Betätigung des Lenkrads (11) imaginär zu begrenzen; **dadurch gekennzeichnet, dass** sie
> eine Auswahlschaltung (85) umfasst, die so konfiguriert ist, dass sie eine Axialkraft mit einem größten Absolutwert aus der Lenkbereichsaxialkraft und der Begrenzungsaxialkraft (F3) als eine Axialkraft ($F_{sp}$) auswählt, die in dem Befehlswert widerspiegelt sein soll.

2. Lenksteuervorrichtung nach Anspruch 1, wobei die Begrenzungsaxialkraftberechnungsschaltung
eine Bereichsbegrenzungsaxialkraftberechnungsschaltung (83), die so konfiguriert ist, dass sie eine Bereichsbegrenzungsaxialkraft (F3) als die Begrenzungsaxialkraft berechnet, um den Betätigungsbereich des Lenkrads auf einen imaginären Betätigungsbereich zu begrenzen; und

eine Betätigungsbegrenzungsaxialkraftberechnungsschaltung (87, 88) umfasst, die so konfiguriert ist, dass sie eine Bestätigungsbegrenzungsaxialkraft (F5, F6) als die Begrenzungsaxialkraft berechnet, um die Bestätigung des Lenkrads in einer Situation imaginär zu begrenzen, in der eine Lenkbetätigung für das gelenkte Rad (16) begrenzt ist.

3. Lenksteuervorrichtung nach Anspruch 2, wobei die Bestätigungsbegrenzungsaxialkraftberechnungsschaltung eine erste Begrenzungsaxialkraftberechnungsschaltung (87) umfasst, die so konfiguriert ist, dass sie eine erste Begrenzungsaxialkraft (F5) als die Begrenzungsaxialkraft berechnet, um die Betätigung des Lenkrads in einer Situation imaginär zu begrenzen, in der das gelenkte Rad (16) an ein Hindernis anstößt.

4. Lenksteuervorrichtung nach Anspruch 2 oder 3, wobei

unter einer Prämisse, dass der Lenkmechanismus eine Struktur (21), die eine Trennung in einer Kraftübertragung zwischen dem Lenkrad (11) und dem gelenkten Rad (16) erreicht, oder eine Struktur aufweist, die eine Verbindung und eine Trennung der Kraftübertragung zwischen dem Lenkrad und dem gelenkten Rad ermöglicht, und dass der Lenkmechanismus mit einem Reaktionsmotor (31), der als der Motor dient und so konfiguriert ist, dass er als die Antriebskraft eine Lenkreaktionskraft erzeugt, die eine in einer einer Betätigungsrichtung des Lenkrads abgewandten Richtung auszuübende Kraft darstellt, und mit einem Lenkbetätigungsmotor (41) versehen ist, der als der Motor dient und so konfiguriert ist, dass er auf die Lenkbetätigungswelle (14) eine Lenkbetätigungskraft ausübt, die eine Kraft zum Drehen des gelenkten Rades darstellt,

die Betätigungsbegrenzungsaxialkraftberechnungsschaltung eine zweite Begrenzungsaxialkraftberechnungsschaltung (88) aufweist, die so konfiguriert ist, dass sie eine zweite Begrenzungsaxialkraft (F6) als die Begrenzungsaxialkraft berechnet, um die Betätigung des Lenkrads in einer Situation imaginär zu begrenzen, in der ein Drehmoment des Lenkbetätigungsmotors im Vergleich zu einem ursprünglichen Drehmoment begrenzt ist.

5. Lenksteuervorrichtung nach einem der Ansprüche 1 bis 4, wobei die Lenkbereichsaxialkraftberechnungsschaltung (81, 82) eine Geschätzt-Axialkraft-Berechnungsschaltung (82) aufweist, die so konfiguriert ist, dass sie die Axialkraft der Lenkbetätigungswelle (14) als eine geschätzte Axialkraft (F2) basierend auf einem Zustandsbetrag ($I_b$) berechnet, der einen Straßenzustand oder ein Fahrzeugverhalten widerspiegelt.

6. Lenksteuervorrichtung nach Anspruch 5, ferner mit:

einer Ideal-Axialkraft-Berechnungsschaltung (81), die so konfiguriert ist, dass sie eine ideale Axialkraft (F1) basierend auf einem Zieldrehwinkel ($\theta_p^*$) eines rotierenden Körpers (44) berechnet, der so konfiguriert ist, dass er sich in Verbindung mit der Lenkbetätigung für das gelenkte Rad (16) dreht, wobei der Zieldrehwinkel in Abhängigkeit vom Lenkzustand berechnet ist; und
einer Zuweisungsberechnungsschaltung (84), die so konfiguriert ist, dass sie eine gemischte Axialkraft (F4) als eine endgültige Lenkbereichsaxialkraft (Fsp) berechnet, indem sie einen Wert, der durch Multiplizieren der geschätzten Axialkraft (F2) mit einem Zuweisungsverhältnis erhalten ist, und einen Wert, der durch Multiplizieren der idealen Axialkraft (F1) mit einem Zuweisungsverhältnis erhalten ist, aufsummiert, wobei die Zuweisungsverhältnisse individuell in Abhängigkeit vom das Fahrzeugverhalten oder den Straßenzustand widerspiegelnden Zustandsbetrag oder in Abhängigkeit von dem Lenkzustand eingestellt sind.

**Revendications**

1. Appareil de commande de direction configuré pour commander un moteur (31, 41) sur la base d'une valeur d'instruction (T*, $T_p^*$) calculée en fonction d'une condition de direction, le moteur étant configuré pour générer une force d'entraînement devant être appliquée à un mécanisme de direction d'un véhicule comportant un arbre d'actionnement de direction (14) configuré pour faire tourner une roue directrice (16), l'appareil de commande de direction comprenant :

un circuit de calcul de force axiale de plage de direction (81, 82) configuré pour calculer une force axiale de plage de direction (F1, F2) sur la base d'une quantité de condition du véhicule, la force axiale de plage de direction étant une force axiale appliquée à l'arbre d'actionnement de direction lorsqu'un volant (11) est actionné dans une plage d'actionnement définie ; et
un circuit de calcul de force axiale de limitation (83, 87, 88) configuré pour calculer une force axiale de limitation (F3) comme force axiale de l'arbre d'actionnement de direction sur la base d'une quantité de condition du véhicule dans laquelle la condition de direction ou une condition dirigée de la roue directrice (16) est réfléchie, de manière à limiter de manière imaginaire un actionnement du volant (11) ;
**caractérisé en ce qu'**il comprend
un circuit de sélection (85) configuré pour sélectionner une force axiale, dont une valeur absolue la plus élevée est en dehors de la force axiale de plage de direction et de la force axiale de limitation (F3), comme force axiale ($F_{sp}$) devant être réfléchie dans la valeur d'instruction.

2. Appareil de commande de direction selon la revendication 1, dans lequel le circuit de calcul de force axiale de limitation comporte :

un circuit de calcul de force axiale de limitation de plage (83) configuré pour calculer une force axiale de limitation de plage (F3) comme force axiale de limitation, de manière à limiter la plage d'actionnement du volant à une plage d'actionnement imaginaire ; et
un circuit de calcul de force axiale de limitation d'actionnement (87, 88) configuré pour calculer une force axiale de limitation d'actionnement (F5, F6) comme force axiale de limitation, de manière à limiter de manière imaginaire l'actionnement du volant dans une situation où un actionnement de direction pour la roue directrice (16) est limité.

3. Appareil de commande de direction selon la revendication 2, dans lequel le circuit de calcul de force axiale de limitation d'actionnement comporte un premier circuit de calcul de force axiale de limitation (87) configuré pour calculer une première force axiale de limitation (F5) comme force axiale de limitation de manière à limiter de manière imaginaire l'actionnement du volant dans une situation où la roue directrice (16) bute contre un obstacle.

4. Appareil de commande de direction selon la revendication 2 ou 3, dans lequel
en partant du principe que le mécanisme de direction a une structure (21) qui réalise une séparation de la transmission de puissance entre le volant (11) et la roue directrice (16) ou une structure qui permet la connexion et la déconnexion de la transmission de puissance entre le volant et la roue directrice, et que le mécanisme de direction est pourvu d'un moteur de réaction (31) servant de moteur et configuré pour générer, comme force d'entraînement, une force de réaction de direction qui est une force devant être appliquée dans une direction opposée à une direction d'actionnement du volant, et un moteur d'actionnement de direction (41) servant de moteur et configuré pour appliquer à l'arbre d'actionnement de direction (14) une force d'actionnement de direction qui est une force pour tourner la roue directrice,
le circuit de calcul de force axiale de limitation d'actionnement comporte un deuxième circuit de calcul de force axiale de limitation (88) configuré pour calculer une deuxième force axiale de limitation (F6) comme force axiale de limitation, de manière à limiter de manière imaginaire l'actionnement du volant dans une situation où un couple du moteur d'actionnement de direction est limité en comparaison avec un couple initial.

5. Appareil de commande de direction selon l'une quelconque des revendications 1 à 4, dans lequel le circuit de calcul de force axiale de plage de direction (81, 82) comporte un circuit de calcul de force axiale estimée (82) configuré pour calculer la force axiale de l'arbre d'actionnement de direction (14) comme force axiale estimée (F2) sur la base d'une quantité de condition ($I_b$) qui reflète une condition de route ou un comportement de véhicule.

6. Appareil de commande de direction selon la revendication 5, comprenant en outre :

un circuit de calcul de force axiale idéale (81) configuré pour calculer une force axiale idéale (F1) sur la base d'un angle de rotation cible ($\theta_p^*$) d'un corps rotatif (44) configuré pour tourner en association avec l'actionnement de direction pour la roue directrice (16), l'angle de rotation cible étant calculé en fonction de la condition de direction ; et
un circuit de calcul de répartition (84) configuré pour calculer une force axiale mixte (F4) comme force axiale de plage de direction finale ($F_{sp}$) en additionnant une valeur obtenue en multipliant la force axiale estimée (F2) par un rapport de répartition et une valeur obtenue en multipliant la force axiale idéale (F1) par un rapport de répartition, les rapports de répartition étant fixés individuellement en fonction de la quantité de condition qui reflète le comportement de véhicule ou la condition de route ou en fonction de la condition de direction.

# *FIG.1*

FIG. 2

# FIG.3

TARGET STEERING ANGLE CALCULATION CIRCUIT ~71 ~52

STEERING MODEL

$T_l{}^*$ 73 74

+ $T_{in}{}^*$ $T_{in}{}^*$(FINAL) 75 $\alpha^*$ $\dfrac{1}{S}$ $\omega^*$ $\dfrac{1}{S}$ $\theta^*$

$\dfrac{1}{J}$

$T_h$ + − −

(INERTIA CONTROL CALCULATION CIRCUIT) 76 77

78

$T_{vi}{}^*$ VISCOSITY MODEL (VISCOSITY CONTROL CALCULATION CIRCUIT)

~72

$T_{sp}{}^*$ VEHICLE MODEL (SPRING CHARACTERISTIC CONTROL CALCULATION CIRCUIT)

$\theta_p{}^*$

$V$

$I_b$

EP 3 575 184 B1

FIG.4

EP 3 575 184 B1

# FIG.5

# FIG. 6

# FIG. 7

*FIG. 8*

81 — IDEAL AXIAL FORCE CALCULATION CIRCUIT
82 — ESTIMATED AXIAL FORCE CALCULATION CIRCUIT
83 — IMAGINARY RACK END AXIAL FORCE CALCULATION CIRCUIT
87 — FIRST LIMITING AXIAL FORCE CALCULATION CIRCUIT
88 — SECOND LIMITING AXIAL FORCE CALCULATION CIRCUIT
84 — AXIAL FORCE ALLOCATION CALCULATION CIRCUIT
85 — MAXIMUM VALUE SELECTION CIRCUIT
89 — LIMIT VALUE CALCULATION CIRCUIT

$\theta_p^*$, V, $I_b$, $\theta^*$, $V_b$, $I_{lim}$, $F_1$, $F_2$, $F_3$, $F_4$, $F_5$, $F_6$, $F_{sp}$, $T_{sp}^*$

72, 65, 86

# $FIG.9$

# $FIG.10$

**EP 3 575 184 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017165219 A

- EP 3219580 A1